(19) Europäisches Patentamt
European Patent Office
Office européen des brevets

(11) **EP 4 500 294 B1**

(12) **EUROPEAN PATENT SPECIFICATION**

(45) Date of publication and mention
of the grant of the patent:
**25.03.2026 Bulletin 2026/13**

(21) Application number: **23705738.5**

(22) Date of filing: **16.01.2023**

(51) International Patent Classification (IPC):
*G06E 3/00* (2006.01)  *G06N 3/0464* (2023.01)
*G06N 3/0499* (2023.01)  *G06N 3/065* (2023.01)
*G06N 3/0495* (2023.01)  *G06N 3/084* (2023.01)
*G06N 3/09* (2023.01)  *G06F 7/544* (2006.01)

(52) Cooperative Patent Classification (CPC):
**G06E 3/008; G06N 3/0464; G06N 3/0495;
G06N 3/0499; G06N 3/065; G06N 3/084;
G06N 3/09;** G06F 7/5443

(86) International application number:
**PCT/US2023/010879**

(87) International publication number:
**WO 2023/191930 (05.10.2023 Gazette 2023/40)**

(54) **ANALOG MULTIPLY-AND-ACCUMULATE CIRCUIT AWARE TRAINING**

ANALOGES MULTIPLIZIER- UND AKKUMULIERSCHALTUNGSBEWUSSTES TRAINING

ENTRAÎNEMENT SENSIBLE AU CIRCUIT DE MULTIPLICATION ET D'ACCUMULATION
ANALOGIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.03.2022 US 202217709976**

(43) Date of publication of application:
**05.02.2025 Bulletin 2025/06**

(73) Proprietor: **Microsoft Technology Licensing, LLC
Redmond, WA 98052-6399 (US)**

(72) Inventors:
• **REFAEL KALIM, Yehonathan**
Redmond, Washington 98052-6399 (US)
• **KIRSHENBOIM, Gilad**
Redmond, Washington 98052-6399 (US)
• **AMIR, Guy David**
Redmond, Washington 98052-6399 (US)
• **BURGER, Douglas Christopher**
Redmond, Washington 98052-6399 (US)

(74) Representative: **Page White Farrer
Bedford House
21a John Street
London WC1N 2BF (GB)**

(56) References cited:
• **JINGYANG ZHANG ET AL: "Exploring Bit-Slice
Sparsity in Deep Neural Networks for Efficient
ReRAM-Based Deployment", ARXIV.ORG,
CORNELL UNIVERSITY LIBRARY, 201 OLIN
LIBRARY CORNELL UNIVERSITY ITHACA, NY
14853, 18 September 2019 (2019-09-18),
XP081535814**
• **CHUTENG ZHOU ET AL: "Noisy Machines:
Understanding Noisy Neural Networks and
Enhancing Robustness to Analog Hardware
Errors Using Distillation", ARXIV.ORG,
CORNELL UNIVERSITY LIBRARY, 201 OLIN
LIBRARY CORNELL UNIVERSITY ITHACA, NY
14853, 14 January 2020 (2020-01-14),
XP081578600**

- LINJIE YANG ET AL: "FracBits: Mixed Precision Quantization via Fractional Bit-Widths", ARXIV.ORG, CORNELL UNIVERSITY LIBRARY, 201 OLIN LIBRARY CORNELL UNIVERSITY ITHACA, NY 14853, 3 December 2020 (2020-12-03), XP081828042
- SHAFIEE ALI ET AL: "ISAAC: A Convolutional Neural Network Accelerator with In-Situ Analog Arithmetic in Crossbars", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18 June 2016 (2016-06-18), pages 14 - 26, XP032950645, ISSN: 1063-6897, ISBN: 978-0-7695-3174-8, [retrieved on 20160824], DOI: 10.1109/ISCA.2016.12
- KARIMZADEH FOROOZAN ET AL: "BitS-Net: Bit-Sparse Deep Neural Network for Energy-Efficient RRAM-Based Compute-In-Memory", IEEE TRANSACTIONS ON CIRCUITS AND SYSTEMS I: REGULAR PAPERS, IEEE, US, vol. 69, no. 5, 1 February 2022 (2022-02-01), pages 1952 - 1961, XP011906678, ISSN: 1549-8328, [retrieved on 20220201], DOI: 10.1109/TCSI.2022.3145687
- HUANRUI YANG ET AL: "BSQ: Exploring Bit-Level Sparsity for Mixed-Precision Neural Network Quantization", ARXIV.ORG, CORNELL UNIVERSITY LIBRARY, 201 OLIN LIBRARY CORNELL UNIVERSITY ITHACA, NY 14853, 20 February 2021 (2021-02-20), XP081889399

**Description**

BACKGROUND

AI (Artificial Intelligence) models are used in many applications. These models implement a machine-learned algorithm. After a model is trained, it is used for inference, such as for classifying an input, analyzing an audio signal, and more.

"Exploring Bit-slice Sparsity in Deep Neural Networks for Efficient ReRAM-Based Deployment" (Jingyang Zhang et al, arXiv:1909.08496v2) proposes an algorithm to induce bit-slice sparsity during the training of dynamic fixed-point DNNs in order to speed up processing and reduces power and area overhead.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods, systems, apparatuses, devices, and computer program products are provided herein for training techniques to reduce the power consumption and decrease the inference time of a neural network. An estimate of the amount of power consumed by analog multiply-and-accumulation circuits of a hardware accelerator on which the neural network executes during inference is determined during the training of the neural network. The estimate is based at least on a number of non-zero midterms generated by the analog multiply-and-accumulation circuits and the computational precision of the analog multiply-and-accumulation circuits. A loss function of the neural network is modified such that it formulates the non-zero midterms and the computational precision. The training process forces the modified loss function to generate a sparse bit representation of the weight parameters of the neural network and to reduce the computational precision of the analog multiply-and-accumulation circuits to a predefined precision level.

Noise may also be injected at the output of nodes of the neural network. The injected noise emulates noise generated at an output of the analog multiply-and-accumulation circuits. The injected noise is integrated into the loss function during training of the neural network. By training the neural network utilizing noise-injected data, the weight parameters account for the intrinsic noise that is experienced by the analog multiply-and-accumulation circuits during inference.

Further features and advantages of the subject matter (e.g., examples) disclosed herein, as well as the structure and operation of various embodiments, are described in detail below with reference to the accompanying drawings. It is noted that the present subject matter is not limited to the specific embodiments described herein. Such embodiments are presented herein for illustrative purposes only. Additional embodiments will be apparent to persons skilled in the relevant art(s) based on the teachings contained herein.

BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.

FIG. 1 shows a block diagram of an example neural network (NN) training and inference computing environment for improving the performance of a hardware accelerator in accordance with an embodiment.

FIG. 2 shows a block diagram of a processing array with hybrid multiply-and-accumulate (MAC) processing elements (PEs), according to an example embodiment.

FIG. 3 depicts a block diagram of a system for injecting noise into a neural network in accordance with an example embodiment.

FIG. 4 shows a flowchart of an example of a method for injecting noise into an output generated by a node of a neural network in accordance with an embodiment.

FIG. 5 depicts a block diagram of system for influencing the training of a neural network to reduce the power consumed thereby in accordance with an example embodiment.

FIG. 6 shows a flowchart of an example of a method for minimizing the power consumed by a neural network in accordance with an embodiment.

FIG. 7 shows a flowchart of an example of a method for determining an estimate of an amount of power consumed by analog multiply-and-accumulation circuits of a neural network in accordance with an embodiment.

FIG. 8 shows a block diagram of an example mobile device that may be used to implement various embodiments.

FIG. 9 shows a block diagram of an example computer system in which embodiments may be implemented.

The features and advantages of the examples disclosed will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

DETAILED DESCRIPTION

I. Introduction

The present specification and accompanying drawings disclose one or more embodiments that incorporate the features of the various examples. The scope of the present subject matter is not limited to the disclosed embodiments. The disclosed embodiments merely exemplify the various examples, and modified versions of the disclosed embodiments are also encompassed by the present subject matter. Embodiments of the present subject matter are defined by the claims appended hereto.
References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to effect such feature, structure, or characteristic in connection with other embodiments whether or not explicitly described.
In the discussion, unless otherwise stated, adjectives such as "substantially" and "about" modifying a condition or relationship characteristic of a feature or features of an example embodiment of the disclosure, are understood to mean that the condition or characteristic is defined to within tolerances that are acceptable for operation of the embodiment for an application for which it is intended.
Numerous exemplary embodiments are described as follows. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

II. Example Implementations

The present disclosure is directed to training techniques to reduce the power consumption and decrease the inference time of a neural network. An estimate of the amount of power consumed by analog multiply-and-accumulation circuits of a hardware accelerator on which the neural network executes during inference is determined during the training of the neural network. The estimate is based at least on a number of non-zero midterms generated by the analog multiply-and-accumulation circuits and the computational precision of the ADCs of the analog multiply-and-accumulation circuits. A loss function of the neural network is modified such that it formulates the non-zero midterms and the computational precision. The training process forces the modified loss function to generate a sparse bit representation of the weight parameters of the neural network (which reduces the number of non-zero midterms generated by the analog multiply-and-accumulation circuits) and to reduce the computational precision of the analog multiply-and-accumulation circuits to a predefined precision level.
The minimization of the number of non-zero midterms generated by the analog multiply-and-accumulation circuits and the reduction of the precision of the output values generated by the analog multiply-and-accumulation circuits advantageously reduce the power consumed by the analog multiply-and-accumulation circuits during inferencing, reduce the memory consumption of the neural network, and decrease the inference time of the neural network. As the inference time is reduced, so are the number of processing cycles and amount of memory required to generate an inference or classification. Accordingly, the embodiments described herein advantageously improve the functioning of a computing device on which the neural network executes.
The embodiments described herein are also directed to injecting noise at the output of nodes of the neural network. The injected noise emulates noise generated at an output of the analog multiply-and-accumulation circuits. The injected noise is integrated into the loss function during training of the neural network. By training the neural network utilizing noise-injected data, the weight parameters account for the intrinsic noise that is experienced by analog multiply-and-accumulation circuits during inference. This advantageously causes the neural network to utilize weight parameters that take into account noise that is experience during inference. As such, not only is the neural network able to generate an inference more quickly, but also more accurately. As such, any technological field in which such neural networks are utilized is also improved. For instance, consider a scenario in which a neural network is used in an industrial process, such as predictive maintenance. The ability to predict disruptions to the production line in advance of that disruption taking place is invaluable to the manufacturer. It allows the manager to schedule the downtime at the most advantageous time and eliminate unscheduled downtime. Unscheduled downtime hits the profit margin hard and also can result in the loss of the customer base. It also disrupts the supply chain, causing the carrying of excess stock. A poorly-functioning neural network would improperly predict disruptions, and therefore, would inadvertently cause undesired downtimes that disrupt the supply chain.

Consider another scenario in which a neural network is used for cybersecurity. The neural network would predict whether code executing on a computing system is malicious and automatically cause remedial action to occur. A poorly-functioning neural network may mistakenly misclassify malicious code, thereby causing the code to comprise the system.

Consider yet another scenario in which a neural network is used for autonomous (i.e., self-driving) vehicles. Autonomous vehicles can get into many different situations on the road. If drivers are going to entrust their lives to self-driving cars, they need to be sure that these cars will be ready for any situation. What's more, a vehicle should react to these situations better than a human driver would. A fully autonomous vehicle cannot be limited to handling a few basic scenarios. Such a vehicle should learn and adapt to the ever-changing behaviour of other vehicles around it. Machine learning algorithms enables autonomous vehicles to be capable of making decisions in real time. This increases safety and trust in autonomous cars. A poorly-functioning neural network may misclassify a particular situation in which the vehicle is in, thereby jeopardizing the safety of passengers of the vehicle.

Consider a further scenario in which a neural network is used in biotechnology for predicting a patient's vitals, predicting whether a patient has a disease, or analyzing an X-ray or MRI (magnetic resonance imaging) image. A poorly-functioning neural network may misclassify the vitals and/or the disease or inaccurately analyze an X-ray or MRI. In such a case, the patient may not receive necessary treatment.

These examples are just a small sampling of technologies that would be improved with more accurate neural networks. Embodiments for improved neural networks are described as follows.

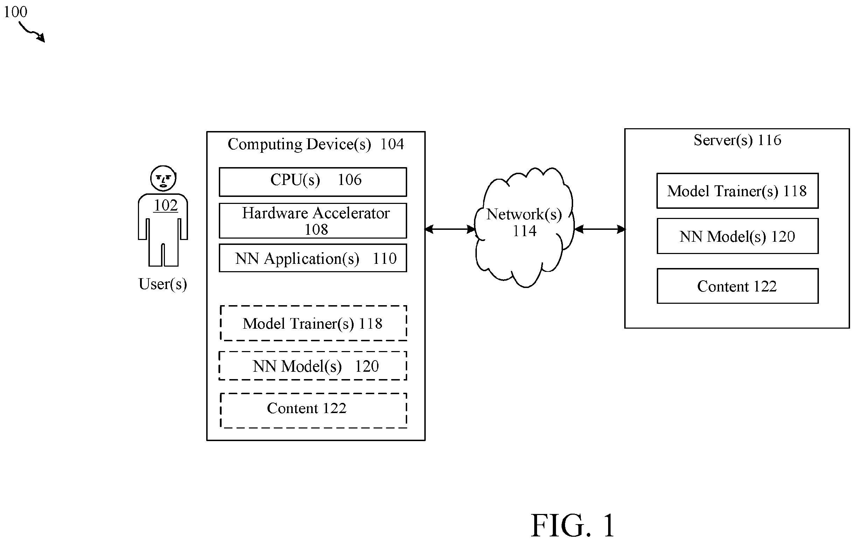

Such embodiments may be implemented in various configurations. For instance, FIG. 1 shows a block diagram of an example neural network (NN) training and inference computing environment (referred to herein as "NN computing environment") 100 for improving the performance (e.g., reducing inference time, reducing power consumption, etc.) of a hardware accelerator (e.g., a neural processor), according to an embodiment. Example NN computing environment 100 may include, for example, one or more computing devices 104, one or more networks 114, and one or more servers 116. Example NN computing environment 100 presents one of many possible examples of computing environments. Example system 100 may comprise any number of computing devices and/or servers, such as example components illustrated in FIG. 1 and other additional or alternative devices not expressly illustrated.

Network(s) 114 may include, for example, one or more of any of a local area network (LAN), a wide area network (WAN), a personal area network (PAN), a combination of communication networks, such as the Internet, and/or a virtual network. In example implementations, computing device(s) 104 and server(s) 116 may be communicatively coupled via network(s) 114. In an implementation, any one or more of server(s) 116 and computing device(s) 104 may communicate via one or more application programming interfaces (APIs), and/or according to other interfaces and/or techniques. Server(s) 116 and/or computing device(s) 104 may include one or more network interfaces that enable communications between devices. Examples of such a network interface, wired or wireless, may include an IEEE 802.11 wireless LAN (WLAN) wireless interface, a Worldwide Interoperability for Microwave Access (Wi-MAX) interface, an Ethernet interface, a Universal Serial Bus (USB) interface, a cellular network interface, a Bluetooth™ interface, a near field communication (NFC) interface, etc. Further examples of network interfaces are described elsewhere herein.

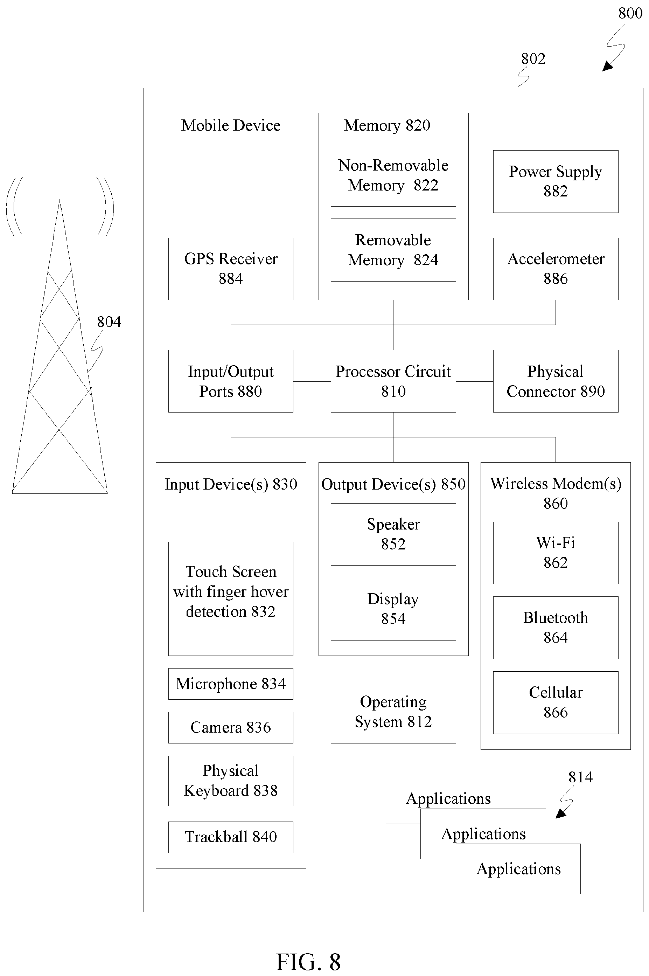

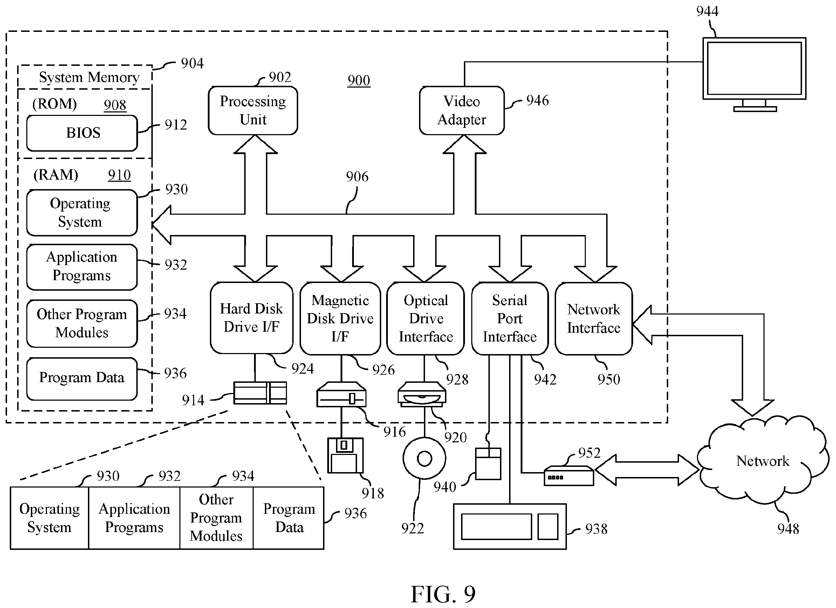

Computing device(s) 104 may comprise computing devices utilized by one or more users (e.g., individual users, family users, enterprise users, governmental users, administrators, hackers, etc.) generally referenced as user(s) 102. Computing device(s) 104 may comprise one or more applications, operating systems, virtual machines (VMs), storage devices, etc., that may be executed, hosted, and/or stored therein or via one or more other computing devices via network(s) 114. In an example, computing device(s) 104 may access one or more server devices, such as server(s) 116, to provide information, request one or more services (e.g., content, model(s), model training) and/or receive one or more results (e.g., trained model(s)). Computing device(s) 104 may represent any number of computing devices and any number and type of groups (e.g., various users among multiple cloud service tenants). User(s) 102 may represent any number of persons authorized to access one or more computing resources. Computing device(s) 104 may each be any type of stationary or mobile computing device, including a mobile computer or mobile computing device (e.g., a Microsoft® Surface® device, a personal digital assistant (PDA), a laptop computer, a notebook computer, a tablet computer such as an Apple iPad™, a netbook, etc.), a mobile phone, a wearable computing device, or other type of mobile device, or a stationary computing device such as a desktop computer or PC (personal computer), or a server. Computing device(s) 104 are not limited to physical machines, but may include other types of machines or nodes, such as a virtual machine, that are executed in physical machines. Computing device(s) 104 may each interface with authentication and authorization server(s) 116, for example, through APIs and/or by other mechanisms. Any number of program interfaces may coexist on computing device(s) 104. Example computing devices with example features are presented in FIGS. 8 and 9. Computing device(s) 104 have respective computing environments. Computing device(s) 104 may execute one or more processes in their respective computing environments. A process is any type of executable (e.g., binary, program, application, etc.) that is being executed by a computing device. A computing environment may be any computing environment (e.g., any combination of hardware, software and firmware). For example, computing device(s) 104 may include one or more central processing units (CPU(s)) 106 that execute instructions, a hardware accelerator 108 that implements one or more neural network (NN) models 120, one or more NN applications 110 that utilize NN model(s) 120, etc.

Server(s) 116 may comprise one or more computing devices, servers, services, local processes, remote machines, web services, etc. for providing NN training, models and/or content to computing device(s) 104. In an example, server(s) 116 may comprise a server located on an organization's premises and/or coupled to an organization's local network, a remotely located server, a cloud-based server (e.g., one or more servers in a distributed manner), or any other device or service that may host, manage, and/or provide NN training, models (e.g., NN model(s) 120) and/or content (e.g., content 122). Server(s) 116 may be implemented as a plurality of programs executed by one or more computing devices. Server programs and content may be distinguished by logic or functionality (e.g., as shown by example in FIG. 1).

Server(s) 116 may each include one or more model trainers 118, one or more NN models 120, and/or content 122. In some examples, computing device(s) 104 may include model trainer(s) 118, NN model(s) 120, and/or content 122, which may be developed on computing device(s) 104, downloaded from server(s) 116, etc.

Example NN computing environment 100 may operate at the edge or in an edge domain, referring to the edge or boundary of one or more networks in network(s) 114, although the embodiments described herein are not so limited. Edge domain may include an end user device (e.g., computing device(s) 104), such as a laptop, mobile phone, and/or any IoT device (e.g., security camera). Artificial intelligence (AI) neural network (NN) models (e.g., NN model(s) 120) may be used in many applications (e.g., NN application(s) 110), such as image classification and speech recognition applications. An AI NN model, referred to as a model, may comprise a plurality of neurons (or nodes). Each neuron is associated with a weight, which emphasizes the importance of a particular neuron. For instance, suppose a neural network is configured to classify whether a picture is a bird. In this case, neurons containing features of a bird would be weighed more than features that are atypical of a bird. The weights of a neural network are learned through training on a dataset. The neural network executes multiple times, changing its weights through backpropagation with respect to a loss function. In essence, the neural network tests data, makes predictions, and determines a score representative of its accuracy. Then, it uses this score to make itself slightly more accurate by updating the weights accordingly. Through this process, a neural network can learn to improve the accuracy of its predictions.

An example of NN model is a convolutional neural network. Such networks comprise a plurality of different layers that apply functions to extract various features from a data item inputted thereto and reduce the complexity of the data item. For example, the layers may comprise at least one or more convolutional layers, one or more pooling layers, a fully-connected layer, etc.

Convolutional neural networks are trained in a similar manner as other artificial neural networks, where the convolutional neural network is initialized with random weights, makes a prediction using these randomized weights, and determines its accuracy using a loss function. The weights are then updated based at least on the loss function in an attempt to make a more accurate prediction.

A trained model (e.g., NN model(s) 120) may be used for inference. For example, NN application(s) 110 may use a trained model (e.g., NN model(s) 120) to infer a classification (e.g., classify an image in content 122 as a person or a vehicle).

There may be one or more user experience (UX) scenarios on computing device(s) 104 that may rely on AI. Experiences driven by AI may involve creating and/or running algorithms without a human writer (e.g., a machine may train algorithms itself). Humans may (e.g., alternatively and/or in conjunction with AI) write programs or algorithms manually in software (e.g., C code) to perform tasks.

NN application(s) 110 may pertain to a wide variety of AI applications, such as audio (e.g., noise suppression, spatial audio, speaker separation to distinguish between speakers), video (e.g., enhancement compression), speech (e.g., dictation, NTTS, voice access, translation), system health (e.g., security such as antivirus, battery usage, power usage), etc.

User(s) 102 may use computing device(s) 104 to run NN application(s) 110, which may, for example, allow user(s) 102 to browse server(s) 116 and/or select content 122. User(s) 102 may use computing device(s) 104, for example, to process content 120 (e.g., using NN model(s) 112a). NN application(s) 110 may process content 122 using a trained model (e.g., among NN model(s) 120). An example of an NN application may be a pattern recognition application to identify objects (e.g., people, animals, plants, etc.) in image frames. User(s) 102 may use computing device(s) 104 to run NN application(s) 110, for example, to select, train or implement NN model(s) 120 (e.g., use models to infer classifications of content 120).

Model trainer(s) 118 may train and evaluate (e.g., generate) one or more models (e.g., NN model(s) 120) to improve performance of a hardware accelerator (e.g., hardware accelerator 108) comprising hybrid or analog multiply-and-accumulate (MAC) processing elements (PEs). Model trainer(s) 118 may receive as input an original or modified form of content 122 generated by one or more computing devices (e.g., computing device(s) 104, server(s) 116, etc.). Model trainer(s) 118 may provide (e.g., manual and/or automated) labeling (e.g., pre-classification) of features (e.g., Ifmaps) for training content 122, for example, to produce a featurized training dataset with known labels. A training set may be split into a training set and a testing set. A training process may train a model with a training set. A trained model may be retrained, for example, as needed or periodically (e.g., with an expanded training set).

Multiple models with multiple (e.g., different) feature sets may be trained (and evaluated). Various neural network models may be trained and evaluated, such as convolutional neural networks and long short-term memory (LSTM)-based neural networks.

Trained NN model(s) 120 may include, for example, a feature extractor, a feature transformer, and a classifier. A feature extractor may extract features from content 122. A feature transformer may transform extracted features into a format expected by a classifier. A feature transformer may, for example, convert the output of feature extractor into feature vectors expected by a classifier. A classifier may classify the extracted features as one or more classes. Classifier may generate an associated confidence level for a (e.g., each) classification (e.g., prediction).

Trained NN model(s) 120 may receive as input an original or modified form of content 122 generated by one or more computing devices (e.g., computing device(s) 104 or server(s) 116). NN model(s) 120 may generate classifications based at least on inputs based at least on the training received from model trainer(s) 120. Classifications may include, for example, binary or multiclass classifications. Classifications may include or be accompanied by a confidence level, which may be based at least on a level of similarity to labels for one or more training sets.

Trained NN model(s) 120 may be saved (e.g., by model trainer(s)) 118) in a file. The file may be loaded into one or more devices (e.g., computing device(s) 104) to use the model (e.g., to infer). NN model(s) 120 may interface to network(s) 114 for input (e.g., content 122) to generate results (e.g., by trained NN model(s) 120 processing content 122). In an example, a NN model(s) 120 may be trained to detect multiple classes based at least on training frames associated with training labels. For example, a deep neural network (DNN) may be tasked to understand what viewable objects (e.g., cat, dog, person, car, etc.) appear in content 122.

NN model(s) 120 may comprise a DNN model. A convolutional neural network is a type of DNN. NN model(s) 120 may be implemented (e.g., in part) by hardware. For example, hardware accelerator 108 may accelerate computations for one or more CNN layers. Hardware (e.g., hardware accelerator 108) used to implement an AI model may have a significant impact on the power efficiency of an AI model during inference on an edge device (e.g., a personal computer (PC)). Power efficiency and/or model accuracy may play a (e.g., significant) role in the performance of an AI model.

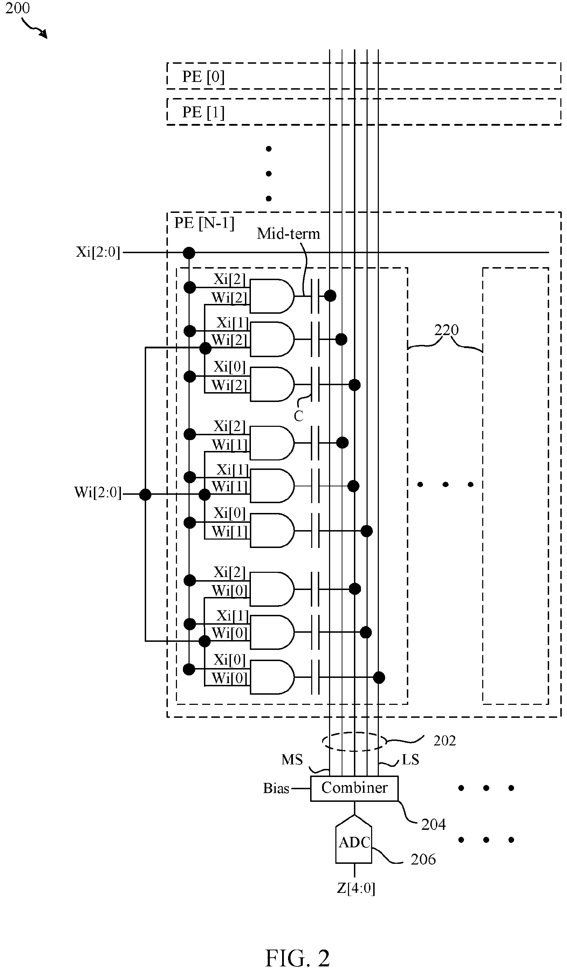

Examples of hardware accelerator 108 include, but are not limited to a neural processing unit (NPU), a tensor processing unit (TPU), a neural network processor (NNP), an intelligence processing unit (IPU), etc. Hardware accelerator 108 comprises a plurality of digital, hybrid or analog multiply-and-accumulate (MAC) circuits, where each MAC circuit is utilized to implement a neuron (or node) of a neural network. A hybrid MAC circuit may include, for example, digital multiplication and analog accumulation. An analog MAC (AMAC) (e.g., referring to analog and hybrid MACs) may be more power efficient than a digital MAC (DMAC) circuit. An example of a MAC circuit is described below with reference to FIG. 2.

NN application(s) 110 (e.g., and/or operating system(s)) executed by CPU(s) 106 may utilize hardware accelerator 108 to implement NN model(s) 120. Computing device(s) 104 may be a battery-operated device, such as a mobile phone. It may be important for hardware accelerator 108 to implement NN model(s) 120 with less power to conserve energy stored in the device battery and/or in general to conserve energy.

In some examples, a DNN (e.g., a CNN) may be implemented with a (e.g., highly) parallel computation architecture, such as single instruction, multiple data (SIMD), to provide high-throughput convolutions. Convolutions may dominate CNN runtime (e.g., convolutions may account for over 90% of CNN operations). Memory bandwidth may impact power efficiency and/or may cause a memory access bottleneck. For example, a (e.g., each) MAC operation may involve four memory accesses, which may lead to high energy consumption.

FIG. 2 shows a block diagram of an example of a MAC circuit 200 with hybrid MAC processing elements (PEs), according to an example embodiment. Example MAC circuit 200 presents one of many possible example configurations of a MAC circuit. MAC circuit 200 may be utilized to implement each neuron or node of a neural network.

Example MAC circuit 200 may include N processing elements (e.g., PE[0] to PE[N-1]) coupled to (e.g., weighted) a charge collection bus 202. The charge-sharing hybrid (digital-analog) MAC architecture shown in FIG. 2 may significantly reduce MAC power consumption by splitting multiply-and-accumulate operations between digital and analog domains.

As shown by example in FIG. 2, midterms may be calculated by digital circuitry (e.g., AND gates) configured to multiply input data $Xi[2:0]$ by weight parameters $Wi[2:0]$. Midterms may be accumulated by analog circuitry. For example, midterm outputs of the digital circuitry may charge (e.g., relatively small) charge accumulation capacitors C coupled to charge collection lines in charge collection bus 202. Charge accumulation capacitors C may have (e.g., significantly) reduced $C_{load}$. In an example implementation, a value of charge accumulation capacitors C may be 0.5 femto Farads (fF) (e.g., for a 12nm Fin-Fet process).

Midterm summation may be calculated based on a charge-sharing concept. A charge for each midterm result may be transferred from the digital multiplication to a (e.g., global) charge collection line (e.g., metal bit line). Midterms with the same "weight" may be coupled to the same charge collection line. The accumulation of multiple midterms with the same "weight" may be performed by (e.g., passively) accumulating their charges on the same metal bit line. Passive accumulation may conserve energy because passive accumulation does not consume energy. Midterms on a charge collection line representing a smaller weight (e.g., least significant (LS) charge collection line) may have less value than midterms on charge collection lines representing higher weights (e.g., most significant (MS) charge collection line).

Combiner 204 may be coupled to charge collection bus 202 and an analog-to-digital converter (ADC) 206. Charges on charge collection bus 202 may be inputs to combiner 204. Combiner 204 may generate an analog output, which may be provided as input to ADC 206 for conversion to a digital value. Combiner 204 may be controlled or calibrated (e.g., at least in part) by a bias input. The bias may be fixed or variable. Inputs may be normalized, for example, to maintain values within the dynamic range of ADC 206.

Charges on the charge collection lines in charge collection bus 202 may be summed together, for example, by combiner 204. Charges on the bit lines may be weighted and/or by circuitry in combiner 204. Weights may be implemented, for example, in charge lines, in capacitor values, and/or in combiner 204. Combiner 204 may include passive and/or active circuitry. In some examples, combiner 204 may perform a weighted charge summation. Charges on each bit line may be accumulated with charges on other bit lines through one or more voltage dividers (e.g., resistive or capacitive dividers). For example, the charge on each bit line may be accumulated with charges on other bit lines through a capacitance value corresponding to the weight of the bit line (e.g., each charge collection line may be coupled to a capacitor with a different value). For example, a most significant bit (MSB) line may not have a resistor while other lines may have increasing values of resistors to reduce their relative weights by a resistive or capacitive divider. In some examples, charge summation by combiner 204 may be performed on a (e.g., single) multiplication result from a (e.g., single) PE. In some examples, charge summation by combiner 204 may be performed on multiple multiplication results from each of multiple MAC PEs coupled to the same bit lines.

ADC 206 may be, for example, a successive approximation register (SAR) ADC. ADC 206 may receive the combined analog value generated by combiner 204. ADC 206 may (e.g., be configured to) convert the total combined or summed charge generated by combiner into a digital representation (e.g., Z[4:0]). In some examples, digital conversion by ADC 206 may be performed on a (e.g., single) multiplication result from a (e.g., single) PE. In some examples, digital conversion by ADC 206 may be performed on multiple multiplication results from each of multiple MAC PEs coupled to the same bit lines. Digital representation (e.g., Z[4:0]) may represent summation of one or multiple PE products. Digital representation (e.g., Z[4:0]) may be referred to as a dot product. In some examples, ADC 206 may convert the (e.g., entire) dot product operation (e.g., using the relevant inputs, such as pixels, and channels of the input data and filters, such as weights, that may be used to calculate an output pixel).

In an example (e.g., as shown in FIG. 2), there may be two three-bit vectors X[2:0] and W[2:0], which may be multiplied and accumulated. Multiplication results may be indicated by midterms. Midterms may be accumulated on weighted charge lines (e.g., five charge lines of charge collection bus 202). The accumulated midterm charges may be accumulated into a single charge by combiner 204. The single charge may be converted into a digital value by ADC 206. A least significant (LS) charge line may have a weight of 1 while a second charge line may have a weight of 2, a third weighted at 4, a fourth weighted at 8, a fifth (e.g., most significant (MS) line) weighted at 16, etc. An example of digital multiplication and weighted analog accumulation is shown below:

$$1 * (X[0]*W[0]) +$$

$$2 * (X[1]*W[0] + X[0]*W[1]) +$$

$$4 * (X[2]*W[0] + X[1]*W[1] + X[0]*W[2]) +$$

$$8 * (X[2]*W[1] + X[1]*W[2]) +$$

$$16 * (X[2]*W[2])$$

Combiner 204 may combine charges on the charge lines according to these weights. Many other weights may be implemented, e.g., LS line at 1/32, second line at 1/16, third at 1/8, fourth at ¼, fifth (e.g., MS line) at ½, etc. ADC 306 may convert the combined charge into output Z[4:0]. Output Z[4:0] corresponds to the output of each node of particular layers of a neural network that perform a convolution operation (e.g. a convolutional layer, a fully-connected layer, etc.). It is noted that convolutional layers may be utilized in an embodiment in which the neural network model(s) 120 are a convolutional neural network. Such a neural network advantageously detects features in content (e.g., content 122) automatically without any human supervision and are also computationally efficient with respect to other types of neural networks.

During inference, MAC circuit 200 may suffer from intrinsic electrical noise, which may be caused by a mismatch of capacitors C and/or other components of MAC circuit 200 (such as, but not limited to amplifiers). The intrinsic noise makes it challenging to achieve high accuracy in neural networks. For instance, NN model(s) 120 may be trained by model trainer(s) 118 utilizing a software-based model of hardware accelerator 108 (i.e., a simulated accelerator). The software-based model of hardware accelerator 108 simulates the behavior of hardware accelerator 108 and MAC circuit 200. The training session is utilized to determine weight parameters of the nodes of the neural network. Once the weight parameters are determined, they are utilized during inferencing, which is performed utilizing a hardware accelerator 108 and MAC circuit 200. The issue is that, conventionally, the simulated accelerator trains on a clean dataset (i.e., data that does not comprise any noise) and learns optimal weight parameters based on the clean dataset. However, during inference, when NN model(s) 120 execute on hardware accelerator 108, the intrinsic electrical noise effectively alters the data being analyzed. Thus, the weight parameters learned during training are not optimized for noisy data. This causes the neural network to take a longer amount of time to generate a classification, thereby causing wasteful expenditure of compute resources (e.g., processing cycles, memory, storage, etc.).

The embodiments described herein solve this issue by adding stochastic (e.g., randomly determined) noise into the loss function used during the training of the NN model(s) 120. In particular, the intrinsic noise of hardware accelerator 108 may be modeled as noise generated at an output of ADC 206 of MAC circuit 200 thereof, which is an estimation of the intrinsic noise generated by the components of MAC circuit 200. The foregoing may be achieved by injecting noise into an output value generated by certain nodes of the NN model(s) 120, where the injected noise emulates the noise generated at the output of ADC 206 of MAC circuit 200.

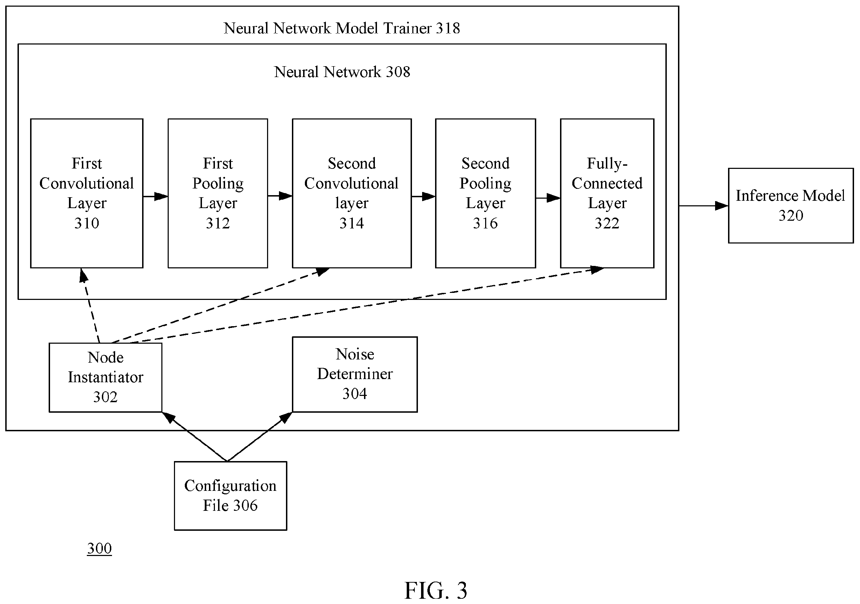

For example, FIG. 3 depicts a block diagram of a system 300 for injecting noise into a neural network 308 in accordance with an example embodiment. As shown in FIG. 3, system 300 comprises a neural network model trainer 318, which is an example of model trainer(s) 118, as described above with reference to FIG. 1. Neural network model trainer 318 comprises a node instantiator 302 and a noise injector 314. An example of neural network model trainer 318 includes, but is not limited to TensorFlow™ published by Google®, LLC. of Mountain View, California.

Neural network model trainer 318 is configured to train a software-based neural network (e.g., neural network 308). Neural network 308 is an example of NN model(s) 120, as described above with reference to FIG. 1. Neural network 308 may comprise a plurality of layers, including, but not limited a first convolutional layer 310, a first pooling layer 312, a second convolutional layer 314, a second pooling layer 316, and a fully-connected layer 322. One or more of the layers (e.g., first convolutional layer 310, second convolutional layer 314, and fully-connected layer 322) comprise a plurality of nodes (or neurons). It is noted that neural network 308 may comprise any number and/or types of layers in addition to and/or in lieu of the layers depicted in FIG. 3, and that the layers described with reference to FIG. 3 are purely for exemplary purposes.

First convolutional layer 310 is configured to receive, as an input, content (e.g., content 122). For each piece of content 122 received, first convolutional layer 310 is configured to extract a first set of features therefrom. In an embodiment in which neural network 308 is being trained to classify an image, examples of the first set of features comprise, lower level features, such as edges, curves, and/or colors. The features are extracted by applying filters (comprising one or more weight parameters) to various portions of content 122. In particular, respective weight parameters are convolved with various portions of content 122 to produce a feature map (also referred to as an activation map). Each of the feature maps capture the result of applying its associated weight parameter to the various portions of content 122. The feature maps are provided to first pooling layer 312.

First pooling layer 312 may be configured to perform a downsampling operation that reduces the dimensionality of each of the feature maps received thereby to generate pooled feature maps. The pooled feature maps are provided to second convolutional layer 314. This enables subsequent layers of neural network 308 (e.g., second convolutional layer 314, second pooling layer 316, and fully-connected layer 322) to determine larger-scale detail than just edges and curves. First pooling layer 312 may use various techniques to downsample the feature maps, including, but not limited to, maximum pooling techniques or average pooling techniques, as is known to persons having ordinary skill in the relevant arts.

Second convolutional layer 314 is configured to extract a second set of features that are different than the first set of features extracted by first convolutional layer 310. Examples of the second set of features comprise higher level features, such as, shapes (e.g., circles, triangles, squares, etc.). The second set of features are extracted by applying one or more filters (comprising weight parameters that are different than the filter(s) utilized by first convolutional layer 310) to various portions of the pooled feature maps. In particular, respective weight parameters are convolved with various portions of the pooled feature maps to generate second feature maps. Each of the second feature maps capture the result of applying its associated filter to the various portions of the pooled feature maps received by second convolutional layer 314.

Second pooling layer 316 is configured to perform a downsampling operation that reduces the dimensionality of each of the second feature maps to generate second pooled feature maps, which are provided to fully-connected layer 322. The downsampling may be performed by applying a filter having a smaller dimensionality to each of the second feature maps in a similar manner as performed by first pooling layer 312. In particular, second pooling layer 316 may use various techniques to downsample the second feature maps, including, but not limited to, maximum pooling techniques or average pooling techniques, as described above.

Fully-connected layer 322 is configured to flatten the second feature maps into a single dimensional vector and determines which features most correlate to a particular classification. For example, if neural network 308 is trained to predict whether content is an image of a dog, the flattened vector may comprise high values that represent high level features likes a paw, four legs, etc. Similarly, if neural network 308 is trained to predict that content comprises a bird, the flattened vector may comprise high values that represent features such as wings, a beak, etc. Based on the analysis, fully-connected layer 322 outputs a classification for the content. The classification is based at least on a probability that content is a particular classification.

Node instantiator 302 is configured to instantiate software-based neural components (e.g., code) that model each neuron of the hardware-based neural network. In particular, node instantiator 302 may instantiate software-based MAC modules (comprising software code or instructions) that emulate the behavior of MAC circuit 200. For instance, node instantiator 302 may instantiate software-based MAC components that model hardware-based MAC circuit 200. The software-based MAC components that are instantiated may be based at least on characteristics (or specification) of the MAC circuits 200 that are to be utilized in the HW-based NN during inference. Such characteristics may be specified by a configuration file 306. For instance, configuration file 306 may specify the input data bit width for input data that is inputted into MAC circuit 200 (e.g., the number of bits that are inputted to MAC circuit 200), a weight parameter bit width that defines the bit width of a weight parameter provided as an input to the MAC circuit 200, an output bit width that defines the bit width of data that is outputted by the MAC circuit 200, a vector size (or dot product depth) supported by MAC circuit 200. As will be described below, the noise of MAC circuit 200 may be modeled in accordance with the characteristics of MAC circuit 200, as defined by configuration file 306.

The software-based MAC modules are also configured to inject noise into output values generated thereby (i.e., the result of performing the multiply-and-accumulate operation). For instance, each software-based MAC module (or node) may be configured to generate an output value in accordance with Equation 1, which is shown below:

$$Z = \left( \sum_i^n XW \right) + \varepsilon \qquad \text{(Equation 1)}$$

where $n$ represents the vector size, $X$ represents the input data, $W$ represents the weight parameter, $\varepsilon$ represents the noise, and Z represents the output data after noise $\varepsilon$ has been injected thereto.

Noise determiner 304 may be configured to determine the amount of noise $\varepsilon$ to be injected into the output value. For instance, noise determiner 304 may comprise a random noise generator that randomly generates noise $\varepsilon$ in accordance with a distribution function. In accordance with an embodiment, the distribution function is a normal distribution function; however, it is noted that other types of distribution functions may be utilized. The distribution function may comprise a zero mean (i.e., a mean value of 0) and a predetermined variance (or $\sigma$ value) (e.g., N(0, $\sigma$)). In accordance with an embodiment, the predetermined variance is proportional to a predetermined percent (e.g., 0.5%) of the fully dynamic range of the output value; however, it is noted that other variance values may be utilized. The predetermined variance value may be based at least on the bit width for the output data (i.e., $Z$) and an alpha parameter ($\alpha$) that specifies a dominance level of the noise injected into the output value. The alpha parameter may also be specified in configuration file 306. Accordingly, noise determiner 304 may also be configured to receive configuration file 306 to determine the bit width for the output data Z and the alpha parameter. In accordance with an embodiment, the variance may be determined in accordance with Equation 2, which is provided below:

$$\sigma = \frac{\alpha}{2^{bit\ width\ of\ Z}} \qquad \text{(Equation 2)}$$

In accordance with an embodiment in which alpha parameter $\alpha$ and the bit width of output data Z is 7, the predetermined variance is approximately equal to 0.4% (0.5/2^7 $\approx$ 0.004).

During each iteration of training of neural network 308, noise is injected into the output values of each node instantiated by node instantiator 302 for particular layers of neural network 308 (e.g., first convolutional layer 310, second convolutional layer 314, and fully-connected layer 322) in accordance with Equations 1 and 2 described above. To determine, the weight parameters, the injected noise is integrated into the loss function of neural network 308 used during training, which is shown below with reference to Equation 3:

$$l_{Error}(X + \varepsilon, w, y) \qquad \text{(Equation 3)}$$

where $X$ represents the input data, $\varepsilon$ represents the injected noise, and y is the ground truth classification (or regression ground truth) for the input data $X$ (i.e., the value the neural network should output if it has correctly classified input data $X$).

The weight parameters *w* of neural network 308 are learned through training on a dataset, where neural network 308 executes multiple times, changing its weight parameters through backpropagation with respect to the loss function shown above until convergence is reached (where neural network 308 has learned to properly classify data inputted thereto within a predefined margin of error).

By training neural network 308 utilizing noise-injected data, weight parameters may be determined that account for the intrinsic noise that is experienced by MAC circuit 200 during inference. Neural network model trainer 318 utilizes the determined weight parameters to generate an inference model 320. For each node of the inference model, a weight parameter is associated with the node that is based at least on the noise injected for that noise. That is, the weight parameter associated to a particular node takes into account the injected noise. During inference, each node (implemented via MAC circuit 200) is provided a corresponding weight parameter of the inference model as an input.

The foregoing techniques advantageously cause neural network 308 to utilize weight parameters that take into account noise that is experience during inference. As such, neural network 308 not only is able to generate an inference more quickly, but also more accurately. As the inference time is reduced, so is the number of processing cycles and memory required to generate an inference or classification.

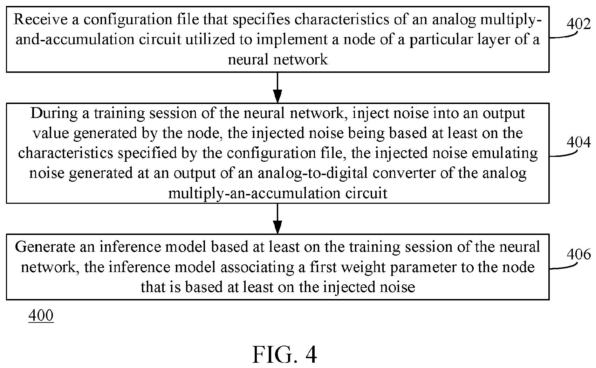

Accordingly, noise may be injected into an output generated by a node of a neural network in many ways. For example, FIG. 4 shows a flowchart of an example of a method 400 for injecting noise into an output generated by a node of a neural network, according to an example embodiment. In an embodiment, flowchart 400 may be implemented by neural network model trainer 318, as shown in FIG. 3, although the method is not limited to that implementation. Accordingly, flowchart 400 will be described with continued reference to FIG. 3. Other structural and operational embodiments will be apparent to persons skilled in the relevant art(s) based on the discussion regarding flowchart 400 and neural network model trainer 318 of FIG. 3.

Flowchart 400 begins with step 402. In step 402, a configuration file is received that specifies characteristics of an analog multiply-and-accumulation circuit utilized to implement a node of a particular layer of a neural network. For example, with reference to FIG. 3, node instantiator 302 and noise determiner 304 may receive configuration file 306 that specifies characteristics of an analog multiply-and-accumulation circuit (e.g., MAC circuit 200, as shown in FIG. 2) utilized to implement a node of a particular layer of a neural network 308.

In accordance with one or more embodiments, the particular layer comprises at least one of a fully-connected layer or a convolutional layer. For example, with reference to FIG. 3, the particular layer comprises at least one of first convolutional layer 310, second convolutional layer 314 or fully-connected layer 322.

In accordance with one or more embodiments, the characteristics comprise at least one of a bit width for input data provided as an input to the analog multiply-and-accumulation circuit, a bit width for a second weight parameter provided as an input to the analog multiply-and-accumulation circuit, a bit width for output data output by the analog-to-digital converter, an alpha parameter specifying a dominance level of the noise injected into the output value, or a vector size supported by the analog multiply-and-accumulation circuit. For example, with reference to FIGS. 2 and 3, the characteristics specified by configuration file 306 may comprise at least one of a bit width for input data provided as an input to analog multiply-and-accumulation circuit 200 (e.g., a bit width of 3, as shown in FIG. 2), a bit width for a second weight parameter provided as an input to analog multiply-and-accumulation circuit 200 (e.g., a bit width of 3, as shown in FIG. 2), a bit width for output data that is outputted by analog-to-digital converter 206 (e.g., a bit width of 5, as shown in FIG. 2), an alpha parameter specifying a dominance level of the noise injected into the output value, or a vector size supported by analog multiply-and-accumulation circuit 200 (e.g., 128 bits). In step 304, during a training session of the neural network, noise is injected into an output value generated by the node, the injected noise being based at least on the characteristics specified by the configuration file, the injected noise emulating noise generated at an output of an analog-to-digital converter of the analog multiply-an-accumulation circuit. For example, with reference to FIG. 3, during each iteration of training session of neural network 308, the noise determined by noise determiner 304 is injected into the output value generated by the node. For instance, the node, as instantiated by node instantiator 302 may receive the noise determined by noise determiner 304 and inject the received noise into the output value generated by the node. The injected noise is based at least on the characteristics specified by configuration file 306. With reference to FIG. 2, the injected noise emulates noise generated at output (e.g., Z[4:0]) of analog-to-digital converter 206 of analog multiply-an-accumulation circuit 200).

In accordance with one or more embodiments, the noise injected into the output value is randomized in accordance with a distribution function. For example, with reference to FIG. 3, noise determiner 304 randomizes the noise in accordance with a distribution function.

In accordance with one or more embodiments, the distribution function is a normal distribution having a zero mean and a predetermined variance. For example, with reference to FIG. 3, noise determiner 304 randomizes the noise in accordance with a normal function having a zero mean and a predetermined variance.

In accordance with one or more embodiments, the predetermined variance is based at least on the bit width for the output data that is outputted by the analog-to-digital converter and the alpha parameter. For example, the predetermined variance may be determined in accordance with Equation 2, as described above.

In step 406, an inference model is generated based at least on the training session of the neural network, the inference model associating a first weight parameter to the node that is based at least on the injected noise. For example, with reference to FIG. 3, neural network model trainer 318 generates inference model 320 based at least on the training session of neural network 308. Inference model 320 associates a first weight parameter to the node that is based at least on the injected noise. For example, the first weight parameter associated with the node may be determined by integrating the injected noise into a loss function of neural network 308 (e.g., the loss function described above with reference to Equation 3), where the first weight parameter is learned via training on a dataset, where neural network 308 executes multiple times, changing the first weight parameter through backpropagation with respect to the loss function until convergence is reached (where neural network 408 has learned to properly classify data inputted thereto within a predefined margin of error).

It is noted that steps 404 and 406 may be performed during each training session iteration with respect to each node of the particular layer (e.g., first convolutional layer 410, second convolutional layer 414, and fully-connected layer 418) of neural network 300.

According to the present disclosure, operating characteristics of a hybrid or analog MAC are leveraged to improve performance (specifically reduce power consumption). Performance improvements described herein apply to MAC architectures. For example, charging power in a hybrid MAC or AMAC architecture may be proportional to the entropy of the data (e.g., proportional to the number of midterms with a value of 1, where zeros have no power "cost"). It has been observed that the power consumption of an AMAC may be proportional to the number of non-zero bits at the output of the midterms (e.g., input to the charge capacitors C), where the lesser the amount of non-zero bits (i.e., the greater the sparseness of non-zero bits), the lower the amount of power consumed by the AMAC. Charge on charge capacitors C may be proportional to the number of non-zero bits. Power consumption of a hybrid or analog MAC may also be proportional to the computational precision of the output bits that are outputted from the ADC. output of the ADC, where lower the computational precision, the lower the amount of power consumed by the AMAC. SAR ADC power may be proportional to the number of conversions (e.g., cycles).

The embodiments described herein are configured to influence the training of a neural network to converge when the amount of non-zero bits at the output of the midterms reaches a certain predetermined threshold and the computational precision of the output bits of the ADC reaches a certain predetermined precision level. As used herein, precision refers to the number of output bits that are utilized to provide an output value (i.e., the number of effective bits of the output value), where the greater the number, the more accurate the output value. Computational precision may be measured based at least on the most significant bit of the output value that has a value of one, where the greater the most significant bit, the greater the precision. For instance, consider the following output value "01000." Here the most significant bit comprising the value of one is the fourth bit. Accordingly, there are four effective bits in the output value.

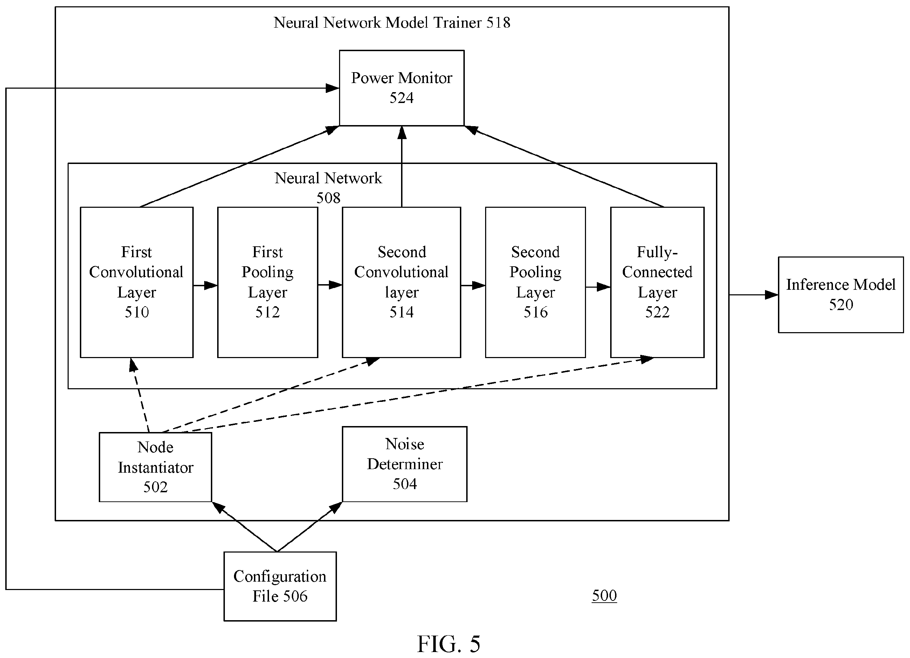

FIG. 5 depicts a block diagram of system 500 for influencing the training of a neural network to reduce the power consumed thereby in accordance with an example embodiment. As shown in FIG. 5, system 500 comprises a neural network model trainer 518, which is an example of neural network model trainer 318, as described above with reference to FIG. 3. Neural network model trainer 518 is configured to train a neural network model, such as neural network 508, which is an example of neural network 308. Neural network 508 may comprise a first convolutional layer 510, a first pooling layer 512, a second convolutional layer 514, a second pooling layer 516, and a fully-connected layer 522, which are examples of first convolutional layer 310, first pooling layer 312, second convolutional layer 314, second pooling layer 316, and fully-connected layer 322, as respectively described above with reference to FIG. 3. Neural network model trainer 518 comprises a node instantiator 502, a power monitor 524 and/or a noise determiner 504. Node instantiator 502 and noise determiner 504 are respective examples of node instantiator 302 and noise determiner 304, as described above with reference to FIG. 3.

During each iteration of a training session for neural network 508, and for each node of particular layers of neural network 308 (e.g., first convolutional layer 510, second convolution layer 514, and fully-connected layer 522), power monitor 524 is configured to determine an estimate of an amount of power that will be consumed by the AMAC circuit (e.g., MAC circuit 200, as shown in FIG. 2) that corresponds to the node during inference. Power monitor 524 may determine the estimate in accordance with Equation 4, which is shown below:

$$(1 - \beta) * \left( \sum_{i=1}^{n} \sum_{j,k}^{x_{bits}, w_{bits}} W_{ik} X_{ij} \right) + \beta * log(\sum_{i}^{n} XW)$$

$$\text{(Equation 4)}$$

where $W$ represents the weight parameter associated with the node, X represents the input data that is inputted into the node, $n$ represents the vector size supported by AMAC circuit 200 utilized to implement the node during inference, $x_{bits}$ represents the bit width of the input data $X$, $w_{bits}$ represents the bit width of the weight parameter $W$, $j$ represents a particular bit of the input data $X$, and $k$ represents a particular bit of the weight parameter $W$.

The first component of Equation 4 $\left(\sum_{i=1}^{n} \sum_{j,k}^{x_{bits},w_{bits}} W_{ik} X_{ij}\right)$ represents the number of non-zero midterms generated by the node (i.e., the non-zero midterms that would be generated by the AMAC circuit (e.g., the number of non-zero midterms generated by the output of the AND gates shown in FIG. 2 and that are input to charge capacitors C) if neural network 508 was executed by hardware accelerator 108. The second component of Equation 4 ( $log(\sum_{i}^{n} XW)$ ) represents the effective number of output bits of the node (e.g., the precision of output value Z[4:0] generated by ADC 206 of MAC circuit 200 if neural network 508 was executed by hardware accelerator 108).

$\beta$ represents a parameter (e.g., ranging between the values of zero and one) that defines what proportion of the first component and the second component of Equation 4 affects the overall power. $x_{bits}$, $w_{bits}$, $n$, and/or $\beta$ may be defined in configuration file 506, which may be provided to power monitor 524.

Power monitor 524 may combine the power amount estimate determined for each iteration of the training session. For example, power monitor 524 may sum the power amount estimates and determine an average amount of power consumed by the node based at least on the sum. Power monitor 524 may also combine the determined average amount of power consumed by each node to generate an overall amount of power consumed by neural network 508.

The overall amount of power may be added into the loss function of neural network 508 by neural network model trainer 518. The foregoing may be represented in accordance with Equation 5, which is shown below:

$$l_{total}(X + \varepsilon, w, y) = l_{Error}(X + \varepsilon, w, y) + \sum_{i}^{neuron\ set} l_{pc_i}(x, w)$$

(Equation 5)

where $l_{pc_i}(x, w)$ represents the loss that expresses the amount of power consumed by a particular node i, as determined via Equation 4 described above. The neuron set represents the total number of neurons or nodes of particular layers of neural network 508 (e.g., first convolutional layer 510, second convolutional layer 514, and fully-connected layer 522). It is noted that while the total loss function of Equation 5 incorporates injected noise $\varepsilon$, as described above with reference to Equations 1 and 3, the embodiments described herein are not so limited.

In order to minimize both the loss function and the power consumed (in terms of reducing the number of non-zero midterms to a predetermined threshold and reducing the precision at the output of an ADC to a predetermined threshold), neural network model trainer 518 may obtain the gradient of the total loss function, as shown below with reference to Equation 6.

$$\nabla_w l_{total}(X + \epsilon, w, y) = \nabla_w(l_{Error}(X + \epsilon, w, y)) + \sum_{i}^{neuron\ set} \nabla_w(l_{pc_i}(x, w))$$

(Equation 6)

The first component of Equation 6 ($\nabla_w(l_{Error}(X + \varepsilon, w, y))$) may be determined using backpropagation during training of neural network 508, where the gradient of the loss function with respect to the weight parameters of neural network 508 is calculated. Example backpropagation techniques that may be utilized include, but are not limited to, gradient descent-based algorithms, stochastic gradient descent-based algorithms, etc. The second component of Equation 6 ($l_{pc_i}(x, w)$) may be analytically determined by power monitor 524 in accordance with Equation 4, as described above (that is $l_{pc}(x, w)$) for a given node is equal to

$(1 - \beta) * \left(\sum_{i=1}^{n} \sum_{j,k}^{x_{bits},w_{bits}} W_{ik} X_{ij}\right) + \beta * log(\sum_{i}^{n} XW)$ .

To affect the weights of the nodes of neural network 508 during training thereof to minimize both the loss and the power consumed by neural network 508 (e.g., to force a sparse bit representation of weights and to reduce the precision of neural network 508), each weight may be determined by neural network model trainer 518 utilizing an iterative optimization algorithm. Examples of interactive optimization algorithms include, but are not limited to, a standard gradient descent-based algorithm, a stochastic gradient descent algorithm, etc. A standard gradient-descent-based algorithm may be utilized in embodiments in which compute efficiency and stability is desired. A stochastic gradient descent algorithm may be utilized in embodiments in which there are memory constraints, as the dataset utilized for such an algorithm is generally smaller in size (generally, a single training sample is utilized). Because a single training sample is utilized, such an algorithm is also relatively computationally fast.

Equation 7, which is shown below, describes a standard gradient descent-based technique for affecting a weight $W$ of a node of neural network 508 to minimize both the loss and the power consumed by neural network:

$$W_{new} = W + \mu \left( \nabla_w l_{pc_i}(x, w) \cdot l_{pc_i}(x, w) \right) + \mu(\nabla_w(l_{Error}(X + \epsilon, w, y) \cdot (l_{Error}(X + \epsilon, w, y)$$

$$(\text{Equation 7})$$

where $\mu$ represents the step size or learning rate of the standard gradient descent-based algorithm utilized to calculate the new weight parameter $W_{new}$.

As shown in Equation 7, the new weight parameter $W_{new}$ is equal to the sum of the old weight parameter (that is determined during a previous iteration of the training session), the gradient of the loss function, and the gradient of the loss that expresses the amount of power consumed by neural network 508. The training process may complete when the number of non-zero midterms generated are reduced to a predetermined threshold and the precision at the output of an ADC reaches a predetermined threshold.

Neural network model trainer 518 utilizes the determined weight parameters to generate an inference model 520. For each node of the inference model, a weight parameter is associated with the node that is determined in accordance with Equation 7 described above. That is, during inference, the weight parameter associated with a particular node minimizes the amount of power consumed by MAC circuit 200 utilized to implement that node (e.g., by minimizing the number of non-zero midterms and reducing the precision of ADC 206). During inference, each node (implemented via MAC circuit 200) is provided a corresponding weight parameter of the inference model as an input.

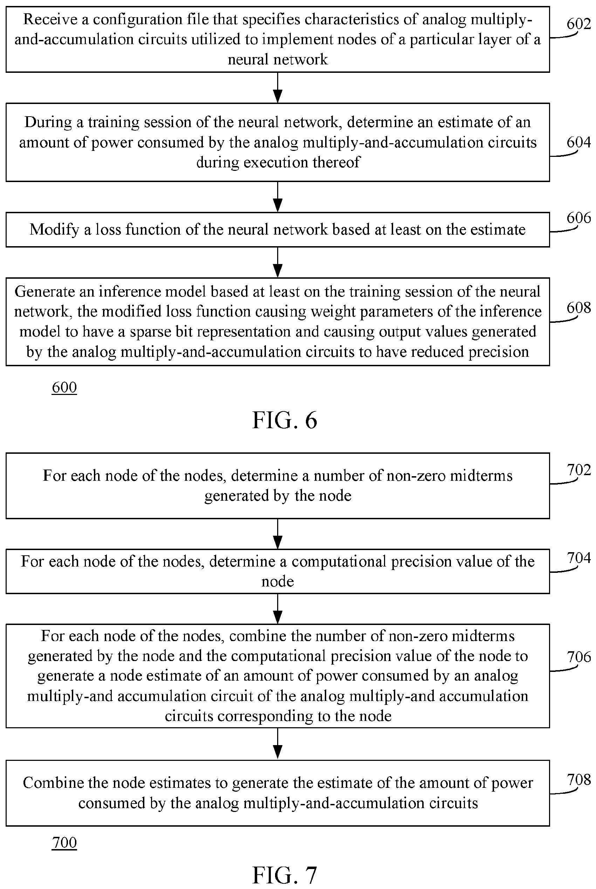

Accordingly, the power consumed by a neural network may be minimized in many ways. For example, FIG. 6 shows a flowchart of an example of a method 600 for minimizing the power consumed by a neural network in accordance with an example embodiment. In an embodiment, flowchart 600 may be implemented by neural network model trainer 518, as shown in FIG. 5, although the method is not limited to that implementation. Accordingly, flowchart 600 will be described with continued reference to FIG. 5. Other structural and operational embodiments will be apparent to persons skilled in the relevant art(s) based on the discussion regarding flowchart 600 and neural network model trainer 518 of FIG. 5.

Flowchart 600 begins with step 602. In step 602, a configuration file is received that specifies characteristics of analog multiply-and-accumulation circuits utilized to implement nodes of a particular layer of a neural network. For example, with reference to FIG. 5, power monitor 524 may receive configuration file 506 that specifies characteristics of analog multiply-and-accumulation circuits (e.g., MAC circuit 200) utilized to implement nodes of a particular layer of neural network 518.

In accordance with one or more embodiments, the particular layer comprises at least one of a fully-connected layer or a convolutional layer. For example, with reference to FIG. 5, the particular layer comprises at least one of first convolutional layer 510, second convolutional layer 514 or fully-connected layer 522.

In accordance with one or more embodiments, the characteristics comprise at least one of a bit width for input data provided as an input for each of the analog multiply-and-accumulation circuits, a bit width for a second weight parameter provided as an input for each of the analog multiply-and-accumulation circuits, a bit width for output data output by analog-to-digital converters of the analog multiply-and-accumulation circuits, or a vector size supported by the analog multiply-and-accumulation circuits. For example, with reference to FIGS. 2 and 5, the characteristics specified by configuration file 506 may comprise at least one of a bit width for input data provided as an input for each analog multiply-and-accumulation circuit 200 (e.g., a bit width of 3, as shown in FIG. 2), a bit width for a second weight parameter provided as an input for each analog multiply-and-accumulation circuit 200 (e.g., a bit width of 3, as shown in FIG. 2), a bit width for output data output by each analog-to-digital converter 206 (e.g., a bit width of 5, as shown in FIG. 2), or a vector size supported by each analog multiply-and-accumulation circuit 200 (e.g., 128 bits).

In step 604, during a training session of the neural network, an estimate of an amount of power consumed by the analog multiply-and-accumulation circuits during execution (or operation) thereof is determined. For example, with reference to FIG. 5, during a training session of neural network 508, power monitor 524 is configured to determine an estimate of an amount of power consumed by MAC circuit 200 during operation thereof. Additional details regarding determining the estimate of the amount of power consumed by AMACs of a neural network are described below with reference to FIG. 7.

In step 606, during the training session of the neural network, a loss function of the neural network is modified based at least on the estimate. For example, with reference to FIG. 5, neural network model trainer 518 modifies the loss function of neural network 508 based at least on the estimate. For instance, neural network model trainer 518 may modify the loss function in accordance with Equation 5, as described above.

In step 608, an inference model is generated based at least on the training session of the neural network, the modified loss function causing weight parameters of the inference model to have a sparse bit representation and causing output values generated by the analog multiply-and-accumulation circuits to have reduced precision. For example, with reference to FIG. 5, neural network model trainer 518 generates inference model 520 based at least on the training session of neural network 508. The modified loss function causes weight parameters of inference model 520 to have a sparse bit representation (which reduces the number of non-zero midterms generated by MAC circuit 200) and causes output values generated by ADC 206 of MAC circuit 200 to have a reduced precision (i.e., the number of effective bits utilized to generate output value Z[4:0] is reduced).

The weight parameters are determined by applying a gradient descent optimization algorithm to the modified loss function during the training session to determine the weight parameters. For example, with reference to FIG. 5, neural network model trainer 518 is configured to apply a gradient descent optimization algorithm in accordance with Equations 6 and 7 to determine the weight parameters.

In accordance with one or more embodiments, noise is injected into output generated by the nodes. The injected nodes emulate noise generated at outputs of analog-to-digital converters of the analog multiply-an-accumulation circuits, and the loss function incorporates the injected noise. For example, with reference to FIG. 5, during each iteration of training session of neural network 508, the noise determined by noise determiner 504 is injected into the output value generated by the node. For instance, the node, as instantiated by node instantiator 502 may receive the noise determined by noise determiner 504 and inject the received noise into the output value generated by the node. The injected noise is based at least on the characteristics specified by configuration file 506. With reference to FIG. 2, the injected noise emulates noise generated at output (e.g., Z[4:0]) of analog-to-digital converter 206 of MAC circuit 200).

FIG. 7 shows a flowchart of an example of a method 700 for determining an estimate of an amount of power consumed by analog multiply-and-accumulation circuits of a neural network in accordance with an example embodiment. In an embodiment, flowchart 700 may be implemented by neural network model trainer 518, as shown in FIG. 5, although the method is not limited to that implementation. Accordingly, flowchart 700 will be described with continued reference to FIG. 6. Other structural and operational embodiments will be apparent to persons skilled in the relevant art(s) based on the discussion regarding flowchart 700 and neural network model trainer 518 of FIG. 5.

Flowchart 700 begins with step 702. In step 702, for each node of the nodes, a number of non-zero midterms generated by the node is determined. For example, with reference to FIG. 5, power monitor 524 determines the number of non-zero midterms generated by the node of neural network 508. The estimate of the number of non-zero midterms of the nodes may be determined in accordance with the first component of Equation 4 ( $\sum_{i=1}^{n} \sum_{j,k}^{x_{bits}, w_{bits}} W_{ik} X_{ij}$ ).

In step 704, for each node of the nodes, a computational precision value is determined for the node. For example, with reference to FIG. 5, power monitor 524 determines the computational precision value of the node. The estimate of the computational precision values for the nodes may be determined in accordance with the second component of Equation 4 ( $log(\sum_{i}^{n} XW)$ ).

In step 706, for each node of the nodes, the number of non-zero midterms generated by the node and the computational precision value of the node are combined to generate a node estimate of an amount of power consumed by an AMAC circuit (e.g., MAC circuit 200) corresponding to the node. For example, with reference to FIG. 5, power monitor 524 combines the number of non-zero midterms generated by the node and the computational precision value of the node to generate the node estimate of the amount of power that will be consumed by the AMAC circuit during inference. The usage of the number of non-zero midterms and the computational precision value advantageously provide an accurate estimation of the power consumed by the AMAC circuit. As described above, the charging power in a hybrid MAC or AMAC architecture may be proportional to the entropy of the data (e.g., proportional to the number of midterms with a value of 1, where zeros have no power "cost"). It has been observed that the power consumption of an AMAC may be proportional to the number of non-zero bits at the output of the midterms (e.g., input to the charge capacitors C), where the lesser the amount of non-zero bits (i.e., the greater the sparseness of non-zero bits), the lower the amount of power consumed by the AMAC. Charge on charge capacitors C may be proportional to the number of non-zero bits. Power consumption of a hybrid or analog MAC may also be proportional to the computational precision of the output bits that are outputted from the ADC. output of the ADC, where lower the computational precision (e.g., the lower number of effective bits of the output of the MAC), the lower the amount of power consumed by the AMAC.

In step 708, the node estimates are combined to generate the estimate of the amount of power consumed by the AMAC circuit. For example, with reference to FIG. 5, power monitor 524 may combine the node estimates to generate the estimate of the amount to power consumed by the AMAC circuits during inference. The estimate of the amount of power consumed by the AMAC circuits may be determined in accordance with the second component of Equation 5, reproduced below:

$$\sum_{i}^{neuron\ set} l_{pc_i}(x,w) \qquad\qquad \text{Equation 5.}$$

III. Example Mobile Device and Computing Device Embodiments

Each of computing device(s) 104, server(s) 116, neural network model trainer 318, neural network model trainer 518 (and/or the component(s) thereof) may be implemented in hardware, or hardware combined with software and/or firmware. For example, NN application(s) 110, model trainer(s) 118, NN model(s) 120, neural network model trainer 318, neural network 308 (and the component(s) thereof), node instantiator 302, noise determiner 304, inference model 320, neural network model trainer 518, neural network 508 (and the component(s) thereof), node instantiator 502, noise determiner 504, power monitor 524, and/or inference model 520 and/or one or more steps of flowcharts 400, 600 and/or 700 may be implemented as computer program code/instructions configured to be executed in one or more processors and stored in a computer readable storage medium. Alternatively, each of NN application(s) 110, hardware accelerator 108, CPU(s) 106, model trainer(s) 118, NN model(s) 120, MAC circuit 200, neural network model trainer 318, neural network 308 (and the component(s) thereof), node instantiator 302, noise determiner 304, inference model 320, neural network model trainer 518, neural network 508 (and the component(s) thereof), node instantiator 502, noise determiner 504, power monitor 524, and/or inference model 520 and/or one or more steps of flowcharts 400, 600 and/or 700 may be implemented as hardware logic/electrical circuitry.

As noted herein, the embodiments described, including system 100 of FIG. 1, MAC circuit 200 of FIG. 2, system 300 of FIG. 3, and system 500 of FIG. 5, along with any components and/or subcomponents thereof, as well as the flowcharts/flow diagrams described herein, including portions thereof, and/or further examples described herein, may be implemented in hardware, or hardware with any combination of software and/or firmware, including being implemented as computer program code configured to be executed in one or more processors and stored in a computer readable storage medium, or being implemented as hardware logic/electrical circuitry, such as being implemented together in a system-on-chip (SoC), a field programmable gate array (FPGA), or an application specific integrated circuit (ASIC). A SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

Embodiments described herein may be implemented in one or more computing devices similar to a mobile system and/or a computing device in stationary or mobile computer embodiments, including one or more features of mobile systems and/or computing devices described herein, as well as alternative features. The descriptions of mobile systems and computing devices provided herein are provided for purposes of illustration, and are not intended to be limiting. Embodiments may be implemented in further types of computer systems, as would be known to persons skilled in the relevant art(s).

FIG. 8 is a block diagram of an exemplary mobile system 800 that includes a mobile device 802 that may implement embodiments described herein. For example, mobile device 802 may be used to implement any system, client, or device, or components/subcomponents thereof, in the preceding sections. As shown in FIG. 8, mobile device 802 includes a variety of optional hardware and software components. Any component in mobile device 802 can communicate with any other component, although not all connections are shown for ease of illustration. Mobile device 802 can be any of a variety of computing devices (e.g., cell phone, smart phone, handheld computer, Personal Digital Assistant (PDA), etc.) and can allow wireless two-way communications with one or more mobile communications networks 804, such as a cellular or satellite network, or with a local area or wide area network.

Mobile device 802 can include a controller or processor 810 (e.g., signal processor, microprocessor, ASIC, or other control and processing logic circuitry) for performing such tasks as signal coding, data processing, input/output processing, power control, and/or other functions. An operating system 812 can control the allocation and usage of the components of mobile device 802 and provide support for one or more application programs 814 (also referred to as "applications" or "apps"). Application programs 814 may include common mobile computing applications (e.g., e-mail applications, calendars, contact managers, web browsers, messaging applications) and any other computing applications (e.g., word processing applications, mapping applications, media player applications).

Mobile device 802 can include memory 820. Memory 820 can include non-removable memory 822 and/or removable memory 824. Non-removable memory 822 can include RAM, ROM, flash memory, a hard disk, or other well-known memory devices or technologies. Removable memory 824 can include flash memory or a Subscriber Identity Module (SIM) card, which is well known in GSM communication systems, or other well-known memory devices or technologies, such as "smart cards." Memory 820 can be used for storing data and/or code for running operating system 812 and application programs 814. Example data can include web pages, text, images, sound files, video data, or other data to be sent to and/or received from one or more network servers or other devices via one or more wired or wireless networks. Memory 820 can be used to store a subscriber identifier, such as an International Mobile Subscriber Identity (IMSI), and an equipment identifier, such as an International Mobile Equipment Identifier (IMEI). Such identifiers can be transmitted to a network server to identify users and equipment.

A number of programs may be stored in memory 820. These programs include operating system 812, one or more application programs 814, and other program modules and program data. Examples of such application programs or program modules may include, for example, computer program logic (e.g., computer program code or instructions) for implementing one or more of system 100 of FIG. 1, MAC circuit 200 of FIG. 2, system 300 of FIG. 3, and system 500 of FIG. 5, along with any components and/or subcomponents thereof, as well as the flowcharts/flow diagrams described herein, including portions thereof, and/or further examples described herein. Mobile device 802 can support one or more input devices 830, such as a touch screen 832, a microphone 834, a camera 836, a physical keyboard 838 and/or a trackball 840 and one or more output devices 850, such as a speaker 852 and a display 854. Other possible output devices (not shown) can include piezoelectric or other haptic output devices. Some devices can serve more than one input/output function. For example, touch screen 832 and display 854 can be combined in a single input/output device. Input devices 830 can include a Natural User Interface (NUI).

One or more wireless modems 860 can be coupled to antenna(s) (not shown) and can support two-way communications between processor 810 and external devices, as is well understood in the art. Modem 860 is shown generically and can include a cellular modem 866 for communicating with the mobile communication network 804 and/or other radio-based modems (e.g., Bluetooth 864 and/or Wi-Fi 862). At least one wireless modem 860 is typically configured for communication with one or more cellular networks, such as a GSM network for data and voice communications within a single cellular network, between cellular networks, or between the mobile device and a public switched telephone network (PSTN).

Mobile device 802 can further include at least one input/output port 880, a power supply 882, a satellite navigation system receiver 884, such as a Global Positioning System (GPS) receiver, an accelerometer 886, and/or a physical connector 890, which can be a USB port, IEEE 1394 (FireWire) port, and/or RS-232 port. The illustrated components of mobile device 802 are not required or all-inclusive, as any components can be deleted and other components can be added as would be recognized by one skilled in the art.

In an embodiment, mobile device 802 is configured to implement any of the above-described features of flowcharts herein. Computer program logic for performing any of the operations, steps, and/or functions described herein may be stored in memory 820 and executed by processor 810. FIG. 9 depicts an exemplary implementation of a computing device 900 in which embodiments may be implemented. For example, each of CPU(s) 106, hardware accelerator 108, NN application(s) 110, model trainer(s) 118, NN model(s) 120, MAC circuit 200, neural network model trainer 318 (and the component(s) described herein), and/or neural network model trainer 518 (and the component(s) described herein), and/or one or more steps of flowcharts 400, 600 and 700 may be implemented in one or more computing devices similar to computing device 900 in stationary or mobile computer embodiments, including one or more features of computing device 900 and/or alternative features. The description of computing device 900 provided herein is provided for purposes of illustration, and is not intended to be limiting. Embodiments may be implemented in further types of computer systems and/or game consoles, etc., as would be known to persons skilled in the relevant art(s).

As shown in FIG. 9, computing device 900 includes one or more processors, referred to as processor circuit 902, a system memory 904, and a bus 906 that couples various system components including system memory 904 to processor circuit 902. Processor circuit 902 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 902 may execute program code stored in a computer readable medium, such as program code of operating system 930, application programs 932, other programs 934, etc. Bus 906 represents one or more of any of several types of bus structures, including a memory bus or memory controller, a peripheral bus, an accelerated graphics port, and a processor or local bus using any of a variety of bus architectures. System memory 904 includes read only memory (ROM) 908 and random access memory (RAM) 910. A basic input/output system 912 (BIOS) is stored in ROM 908.

Computing device 900 also has one or more of the following drives: a hard disk drive 914 for reading from and writing to a hard disk, a magnetic disk drive 916 for reading from or writing to a removable magnetic disk 918, and an optical disk drive 920 for reading from or writing to a removable optical disk 922 such as a CD ROM, DVD ROM, or other optical media. Hard disk drive 914, magnetic disk drive 916, and optical disk drive 920 are connected to bus 906 by a hard disk drive interface 924, a magnetic disk drive interface 926, and an optical drive interface 928, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 930, one or more application programs 932, other programs 934, and program data 936. Application programs 932 or other programs 934 may include, for example, computer program logic (e.g., computer program code or instructions) for each of, along with any components and/or subcomponents thereof, as well as the flowcharts/flow diagrams described herein, including portions thereof, and/or further examples described herein. A user may enter commands and information into the computing device 900 through input devices such as keyboard 938 and pointing device 940. Other input devices (not shown) may include a microphone, joystick, game pad, satellite dish, scanner, a touch screen and/or touch pad, a voice recognition system to receive voice input, a gesture recognition system to receive gesture input, or the like. These and other input devices are often connected to processor circuit 902 through a serial port interface 942 that is coupled to bus 906, but may be connected by other interfaces, such as a parallel port, game port, or a universal serial bus (USB).

A display screen 944 is also connected to bus 906 via an interface, such as a video adapter 946. Display screen 944 may be external to, or incorporated in computing device 900. Display screen 944 may display information, as well as being a user interface for receiving user commands and/or other information (e.g., by touch, finger gestures, virtual keyboard, etc.). In addition to display screen 944, computing device 900 may include other peripheral output devices (not shown) such as speakers and printers.

Computing device 900 is connected to a network 948 (e.g., the Internet) through an adaptor or network interface 950, a modem 952, or other means for establishing communications over the network. Modem 952, which may be internal or external, may be connected to bus 906 via serial port interface 942, as shown in FIG. 9, or may be connected to bus 906 using another interface type, including a parallel interface.

As used herein, the terms "computer program medium," "computer-readable medium," and "computer-readable storage medium," etc., are used to refer to physical hardware media. Examples of such physical hardware media include the hard disk associated with hard disk drive 914, removable magnetic disk 918, removable optical disk 922, other physical hardware media such as RAMs, ROMs, flash memory cards, digital video disks, zip disks, MEMs, nanotechnology-based storage devices, and further types of physical/tangible hardware storage media (including memory 920 of FIG. 9). Such computer-readable media and/or storage media are distinguished from and non-overlapping with communication media and propagating signals (do not include communication media and propagating signals). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Embodiments are also directed to such communication media that are separate and non-overlapping with embodiments directed to computer-readable storage media.

As noted above, computer programs and modules (including application programs 932 and other programs 934) may be stored on the hard disk, magnetic disk, optical disk, ROM, RAM, or other hardware storage medium. Such computer programs may also be received via network interface 950, serial port interface 942, or any other interface type. Such computer programs, when executed or loaded by an application, enable computing device 900 to implement features of embodiments discussed herein. Accordingly, such computer programs represent controllers of the computing device 900.

Embodiments are also directed to computer program products comprising computer code or instructions stored on any computer-readable medium or computer-readable storage medium. Such computer program products include hard disk drives, optical disk drives, memory device packages, portable memory sticks, memory cards, and other types of physical storage hardware.

**Claims**

1. A system (104, 500, 802, 900), comprising:

    at least one processor circuit (16, 810, 902); and
    at least one memory (820, 904) that stores program code (814, 932) configured to be executed by the at least one processor circuit (106, 810, 902), the program code (814, 932) comprising:
    a neural network model trainer (118, 518) configured to:

        receive a configuration file (506) that specifies characteristics of analog multiply-and-accumulation circuits (200) utilized to implement nodes of a particular layer (510, 514, 522) of a neural network (508); and
        during a training session of the neural network (508):

            - determine an estimate of an amount of power consumed by the analog multiply-and-accumulation circuits (200) during execution thereof,
            - add the estimate of the amount of power to a loss function of the neural network (508), thus giving a modified loss function, and
            - learn weight parameters of the neural network (308) through training on a dataset, wherein the neural network executes multiple times, changing its weight parameters through back propagation with respect to the modified loss function until convergence is reached;

wherein the neural network model trainer thereby generates an inference model (520) based at least on the training session of the neural network (508), the modified loss function causing weight parameters of the inference model (520) to have a sparse bit representation and causing output values generated by the analog multiply-and-accumulation circuits (200) to have reduced precision;

wherein the neural network model trainer is configured to determine the estimate of the amount of power consumed by the analog multiply-and-accumulation circuits during execution thereof by:

for each of the nodes:

determining a number of non-zero midterms generated by the node,
determining a computational precision of an output value of an analogue-to-digital converter of a respective one of the multiply-and-accumulate circuits implementing the node, and
combining the number of non-zero midterms generated by the node and the computational precision value of the node to generate a node estimate of an amount of power consumed by the respective analog multiply-and accumulation circuit implementing the node; and

combining the node estimates to generate the estimate of the amount of power consumed by the analog multiply-and-accumulation circuits.

2. The system of claim 1, wherein the particular layer comprises at least one of:

a fully-connected layer; or
a convolutional layer.

3. The system of claim 1, wherein the characteristics comprise at least one of:

a bit width for input data provided as an input for each of the analog multiply-and-accumulation circuits;
a bit width for a second weight parameter provided as an input for each of the analog multiply-and-accumulation circuits;
a bit width for output data output by analog-to-digital converters of the analog multiply-and-accumulation circuits; or
a vector size supported by the analog multiply-and-accumulation circuits.

4. The system of claim 1, wherein the computational precision value for each node is based at least on a most significant bit of the output value generated by the node.

5. The system of claim 1, wherein the neural network model trainer is further configured to:
apply a gradient descent optimization algorithm to the modified loss function during the training session to determine the weight parameters.

6. The system of claim 1, wherein the neural network model trainer is further configured to:

inject noise into output values generated by the nodes, the injected noise emulating noise generated at outputs of analog-to-digital converters of the analog multiply-an-accumulation circuits,
wherein the modified loss function incorporates the injected noise.

7. A computer-implemented method (600), comprising:

receiving (602) a configuration file that specifies characteristics of analog multiply-and-accumulation circuits utilized to implement nodes of a particular layer of a neural network; and
during a training session of the neural network:

- determining (604) an estimate of an amount of power consumed by the analog multiply-and-accumulation circuits during execution thereof, and
- adding (606) adding the estimate of the amount of power to a loss function of the neural network , thus giving a modified loss function, and
- learning weight parameters of the neural network (308) through training on a dataset, wherein the neural network executes multiple times, changing its weight parameters through back propagation with respect to the modified loss function until convergence is reached;

the method thereby generating (608) an inference model based at least on the training session of the neural network, the modified loss function causing the weight parameters of the inference model to have a sparse bit representation and causing output values generated by the analog multiply-and-accumulation circuits to have reduced precision;

wherein the determining of the estimate of the amount of power consumed by the analog multiply-and-accumulation circuits during execution thereof comprises:

for each node of the nodes:

determining a number of non-zero midterms generated by the node,
determining a computational precision of an output value of an analogue-to-digital converter of a respective one of the multiply-and-accumulate circuits implementing the node, and
combining the number of non-zero midterms generated by the node and the computational precision value of the node to generate a node estimate of an amount of power consumed by the respective analog multiply-and accumulation circuit implementing the node; and

combining the node estimates to generate the estimate of the amount of power consumed by the analog multiply-and-accumulation circuits.

8. The method of claim 7, wherein the particular layer comprises at least one of:

a fully-connected layer; or
a convolutional layer.

9. The method of claim 7, wherein the characteristics comprise at least one of:

a bit width for input data provided as an input for each of the analog multiply-and-accumulation circuits;
a bit width for a second weight parameter provided as an input for each of the analog multiply-and-accumulation circuits;
a bit width for output data output by analog-to-digital converters of the analog multiply-and-accumulation circuits; or
a vector size supported by the analog multiply-and-accumulation circuits.

10. The method of claim 7, wherein the computational precision value is based at least on a most significant bit of an output value generated by the node.

11. The method of claim 7, further comprising:
applying a gradient descent optimization algorithm to the modified loss function during the training session to determine the weight parameters.

12. The method of claim 7, further comprising:

injecting noise into output values generated by the nodes, the injected noise emulating noise generated at outputs of analog-to-digital converters of the analog multiply-an-accumulation circuits,
wherein the modified loss function incorporates the injected noise.

13. Program code (814, 932) stored on at least one memory (820, 904) and configured to be executed by at least one processor circuit (16, 810, 902), the program code being configured so as to, when executed by the at least one processor circuit, makes the processor circuit carry out the method of any of claims 7 to 12.

**Patentansprüche**

1. System (104, 500, 802, 900), umfassend:

20

mindestens eine Prozessorschaltung (16, 810, 902); und

mindestens einen Speicher (820, 904), der Programmcode (814, 932) speichert, der konfiguriert ist, um von der mindestens einen Prozessorschaltung (106, 810, 902) ausgeführt zu werden, der Programmcode (814, 932) umfassend:

einen Trainer für ein neuronales Netzwerkmodell (118, 518), der konfiguriert ist zum:

Empfangen einer Konfigurationsdatei (506), die Eigenschaften von analogen Multiplikations- und Akkumulationsschaltungen (200) spezifiziert, die zur Implementierung von Knoten einer bestimmten Schicht (510, 514, 522) eines neuronalen Netzwerks (508) verwendet werden; und

während einer Trainingssitzung des neuronalen Netzwerks (508) :

- Bestimmen einer Schätzung der von den analogen Multiplikations- und Akkumulationsschaltungen (200) während ihrer Ausführung verbrauchten Energiemenge,
- Addieren der Schätzung der Energiemenge zu einer Verlustfunktion des neuronalen Netzwerks (508), wodurch sich eine modifizierte Verlustfunktion ergibt, und
- Lernen von Gewichtungsparametern des neuronalen Netzwerks (308) durch Trainieren auf einem Datensatz, wobei das neuronale Netzwerk mehrfach ausgeführt wird und seine Gewichtungsparameter durch Rückwärtspropagation in Bezug auf die modifizierte Verlustfunktion ändert, bis Konvergenz erreicht ist;

wobei der Trainer für ein neuronales Netzwerkmodell dadurch ein Inferenzmodell (520) erzeugt, das mindestens auf der Trainingssitzung des neuronalen Netzwerks (508) basiert, wobei die modifizierte Verlustfunktion bewirkt, dass die Gewichtsparameter des Inferenzmodells (520) eine spärliche Bitdarstellung aufweisen und bewirkt, dass die von den analogen Multiplikations- und Akkumulationsschaltungen (200) erzeugten Ausgangswerte eine verringerte Präzision aufweisen;

wobei der Trainer für ein neuronales Netzwerkmodell konfiguriert ist, um die Schätzung der von den analogen Multiplikations- und Akkumulationsschaltungen während ihrer Ausführung verbrauchten Energiemenge zu bestimmen, durch:

für jeden der Knoten:

Bestimmen einer Anzahl von durch den Knoten erzeugten Nicht-Null-Zwischenwerten,
Bestimmen einer Rechengenauigkeit eines Ausgangswerts eines Analog-Digital-Wandlers einer jeweiligen der den Knoten implementierenden Multiplikations- und Akkumulationsschaltungen, und
Kombinieren der Anzahl der von dem Knoten erzeugten Nicht-Null-Zwischenwerte und des Rechengenauigkeitswertes des Knotens, um eine Knotenabschätzung einer Energiemenge zu erzeugen, die von der jeweiligen den Knoten implementierenden analogen Multiplikations- und Akkumulationsschaltung verbraucht wird; und
Kombinieren der Knotenschätzungen, um die Schätzung der von den analogen Multiplikations- und Akkumulationsschaltungen verbrauchten Energiemenge zu erzeugen.

2. System nach Anspruch 1, wobei die besondere Schicht mindestens eines von Folgendem umfasst:

eine vollständig verbundene Schicht; oder
eine Faltungsschicht.

3. System nach Anspruch 1, wobei die Eigenschaften mindestens eines von Folgendem umfassen:

eine Bitbreite für Eingangsdaten, die als Eingang für jede der analogen Multiplikations- und Akkumulationsschaltungen bereitgestellt werden;
eine Bitbreite für einen zweiten Gewichtsparameter, der als Eingang für jede der analogen Multiplikations- und Akkumulationsschaltungen bereitgestellt wird;
eine Bitbreite für Ausgangsdaten, die von Analog-Digital-Wandlern der analogen Multiplikations- und Akkumulationsschaltungen ausgegeben werden; oder
eine Vektorgröße, die von den analogen Multiplikations- und Akkumulationsschaltungen unterstützt wird.

4. System nach Anspruch 1, wobei der Rechengenauigkeitswert für jeden Knoten mindestens auf einem höchstwertigen Bit des von dem Knoten erzeugten Ausgangswerts basiert.

5. System nach Anspruch 1, wobei der Trainer für ein neuronales Netzwerkmodell ferner konfiguriert ist zum: Anwenden eines Gradientenabstiegsoptimierungsalgorithmus auf die modifizierte Verlustfunktion während der Trainingssitzung, um die Gewichtungsparameter zu bestimmen.

6. System nach Anspruch 1, wobei der Trainer für ein neuronales Netzwerkmodell ferner konfiguriert ist zum:

Injizieren von Rauschen in die von den Knoten erzeugten Ausgangswerte, wobei das injizierte Rauschen Rauschen emuliert, das an den Ausgängen von Analog-Digital-Wandlern der analogen Multiplikations- und Akkumulationsschaltungen erzeugt wird,
wobei die modifizierte Verlustfunktion das injizierte Rauschen einbezieht.

7. Computerimplementiertes Verfahren (600), umfassend:

Empfangen (602) einer Konfigurationsdatei, die Eigenschaften von analogen Multiplikations- und Akkumulationsschaltungen spezifiziert, die zur Implementierung von Knoten einer bestimmten Schicht eines neuronalen Netzwerks verwendet werden; und
während einer Trainingssitzung des neuronalen Netzwerks:

- Bestimmen (604) einer Schätzung der von den analogen Multiplikations- und Akkumulationsschaltungen während ihrer Ausführung verbrauchten Energiemenge, und
- Hinzufügen (606) der Schätzung der Energiemenge zu einer Verlustfunktion des neuronalen Netzwerks, wodurch sich eine modifizierte Verlustfunktion ergibt, und
- Lernen von Gewichtungsparametern des neuronalen Netzwerks (308) durch Trainieren auf einem Datensatz, wobei das neuronale Netzwerk mehrfach ausgeführt wird und seine Gewichtsparameter durch Rückwärtspropagation in Bezug auf die modifizierte Verlustfunktion ändert, bis Konvergenz erreicht ist;

das Verfahren dadurch ein Inferenzmodell erzeugt (608), das mindestens auf der Trainingssitzung des neuronalen Netzwerks basiert, wobei die modifizierte Verlustfunktion bewirkt, dass die Gewichtungsparameter des Inferenzmodells eine spärliche Bitdarstellung aufweisen und bewirkt, dass die von den analogen Multiplikations- und Akkumulationsschaltungen ausgewiesenen Ausgangswerte eine verringerte Präzision aufweisen;
wobei das Bestimmen der Schätzung der von den analogen Multiplikations- und Akkumulationsschaltungen während ihrer Ausführung verbrauchten Energiemenge Folgendes umfasst:
für jeden Knoten der Knoten:

Bestimmen einer Anzahl von durch den Knoten erzeugten Nicht-Null-Zwischenwerten,
Bestimmen einer Rechengenauigkeit eines Ausgangswerts eines Analog-Digital-Wandlers einer jeweiligen der den Knoten implementierenden Multiplikations- und Akkumulationsschaltungen, und
Kombinieren der Anzahl der von dem Knoten erzeugten Nicht-Null-Zwischenwerte und des Rechengenauigkeitswertes des Knotens, um eine Knotenabschätzung einer Energiemenge zu erzeugen, die von der jeweiligen den Knoten implementierenden analogen Multiplikations- und Akkumulationsschaltung verbraucht wird; und
Kombinieren der Knotenschätzungen, um die Schätzung der von den analogen Multiplikations- und Akkumulationsschaltungen verbrauchten Energiemenge zu erzeugen.

8. Verfahren nach Anspruch 7, wobei die besondere Schicht mindestens eines von Folgendem umfasst: eine vollständig verbundene Schicht; oder
eine Faltungsschicht.

9. Verfahren nach Anspruch 7, wobei die Eigenschaften mindestens eines von Folgendem umfassen:

eine Bitbreite für Eingangsdaten, die als Eingang für jede der analogen Multiplikations- und Akkumulationsschaltungen bereitgestellt werden;
eine Bitbreite für einen zweiten Gewichtsparameter, der als Eingang für jede der analogen Multiplikations- und Akkumulationsschaltungen bereitgestellt wird;
eine Bitbreite für Ausgangsdaten, die von Analog-Digital-Wandlern der analogen Multiplikations- und Akkumulationsschaltungen ausgegeben werden; oder
eine Vektorgröße, die von den analogen Multiplikations- und Akkumulationsschaltungen unterstützt wird.

**10.** Verfahren nach Anspruch 7, wobei der Rechengenauigkeitswert mindestens auf einem höchstwertigen Bit eines von dem Knoten erzeugten Ausgangswerts basiert.

**11.** Verfahren nach Anspruch 7, ferner umfassend:
Anwenden eines Gradientenabstiegsoptimierungsalgorithmus auf die modifizierte Verlustfunktion während der Trainingssitzung, um die Gewichtungsparameter zu bestimmen.

**12.** Verfahren nach Anspruch 7, ferner umfassend:

Injizieren von Rauschen in die von den Knoten erzeugten Ausgangswerte, wobei das injizierte Rauschen Rauschen emuliert, das an den Ausgängen von Analog-Digital-Wandlern der analogen Multiplikations- und Akkumulationsschaltungen erzeugt wird,
wobei die modifizierte Verlustfunktion das injizierte Rauschen einbezieht.

**13.** Programmcode (814, 932), der in mindestens einem Speicher (820, 904) gespeichert und konfiguriert ist, um von mindestens einer Prozessorschaltung (16, 810, 902) ausgeführt zu werden, wobei der Programmcode konfiguriert ist, um, wenn er von der mindestens einen Prozessorschaltung ausgeführt wird, die Prozessorschaltung dazu zu bringen, das Verfahren nach einem der Ansprüche 7 bis 12 auszuführen.

**Revendications**

**1.** Système (104, 500, 802, 900), comprenant :

au moins un circuit de processeur (16, 810, 902) ; et
au moins une mémoire (820, 904) qui stocke un code de programme (814, 932) configuré pour être exécuté par l'au moins un circuit de processeur (106, 810, 902), le code de programme (814, 932) comprenant :
un entraîneur de modèle de réseau neuronal (118, 518) configuré pour :

recevoir un fichier de configuration (506) qui spécifie les caractéristiques de circuits de multiplication et d'accumulation analogiques (200) utilisés pour mettre en œuvre des nœuds d'une couche particulière (510, 514, 522) d'un réseau neuronal (508) ; et
au cours d'une session d'entraînement du réseau neuronal (508) :

- déterminer une estimation d'une quantité d'énergie consommée par les circuits de multiplication et d'accumulation analogiques (200) au cours de leur exécution,
- ajouter l'estimation de la quantité d'énergie à une fonction de perte du réseau neuronal (508), donnant ainsi une fonction de perte modifiée, et
- apprendre les paramètres de poids du réseau neuronal (308) par l'intermédiaire d'un entraînement sur un ensemble de données, dans lequel le réseau neuronal s'exécute plusieurs fois, changeant ses paramètres de poids par l'intermédiaire d'une rétropropagation par rapport à la fonction de perte modifiée jusqu'à ce que la convergence soit atteinte ;

dans lequel l'entraîneur de modèle de réseau neuronal génère ainsi un modèle d'inférence (520) sur la base au moins de la session d'entraînement du réseau neuronal (508), la fonction de perte modifiée amenant les paramètres de poids du modèle d'inférence (520) à avoir une représentation de bits clairsemée et amenant des valeurs de sortie générées par les circuits de multiplication et d'accumulation analogiques (200) à avoir une précision réduite ;
dans lequel l'entraîneur de modèle de réseau neuronal est configuré pour déterminer l'estimation de la quantité d'énergie consommée par les circuits de multiplication et d'accumulation analogiques au cours de leur exécution, par :
pour chacun des nœuds :

la détermination d'un certain nombre de termes intermédiaires non nuls générés par le nœud,
la détermination d'une précision de calcul d'une valeur de sortie d'un convertisseur analogique-numérique d'un circuit respectif des circuits de multiplication et d'accumulation mettant en œuvre le nœud, et
la combinaison du certain nombre de termes intermédiaires non nuls générés par le nœud et de la valeur de précision de calcul du nœud pour générer une estimation de nœud d'une quantité d'énergie consommée par le circuit de multiplication et d'accumulation analogique respectif mettant en œuvre le nœud ; et

la combinaison des estimations de nœud pour générer l'estimation de la quantité d'énergie consommée par les circuits de multiplication et d'accumulation analogiques.

2. Système selon la revendication 1, dans lequel la couche particulière comprend au moins l'un des éléments suivants :

une couche entièrement connectée ; ou
une couche convolutionnelle.

3. Système selon la revendication 1, dans lequel les caractéristiques comprennent au moins l'un des éléments suivants :

une largeur de bits pour les données d'entrée fournies en entrée pour chacun des circuits de multiplication et d'accumulation analogiques ;
une largeur de bits pour un second paramètre de poids fourni en entrée pour chacun des circuits de multiplication et d'accumulation analogiques ;
une largeur de bits pour des données de sortie produites par les convertisseurs analogique-numérique des circuits de multiplication et d'accumulation analogiques ; ou
une taille de vecteur prise en charge par les circuits de multiplication et d'accumulation analogiques.

4. Système selon la revendication 1, dans lequel la valeur de précision de calcul pour chaque nœud est basée au moins sur un bit le plus significatif de la valeur de sortie générée par le nœud.

5. Système selon la revendication 1, dans lequel l'entraîneur de modèle de réseau neuronal est également configuré pour :
appliquer un algorithme d'optimisation de descente de gradient à la fonction de perte modifiée au cours de la session d'entraînement pour déterminer les paramètres de poids.

6. Système selon la revendication 1, dans lequel l'entraîneur de modèle de réseau neuronal est également configuré pour :
injecter du bruit dans des valeurs de sortie générées par les nœuds, le bruit injecté imitant le bruit généré aux sorties de convertisseurs analogique-numérique des circuits de multiplication et d'accumulation analogiques, dans lequel la fonction de perte modifiée intègre le bruit injecté.

7. Procédé mis en œuvre par ordinateur (600), comprenant :

la réception (602) d'un fichier de configuration qui spécifie les caractéristiques des circuits de multiplication et d'accumulation analogiques utilisés pour mettre en œuvre les nœuds d'une couche particulière d'un réseau neuronal ; et
au cours d'une session d'entraînement du réseau neuronal :

- la détermination (604) d'une estimation d'une quantité d'énergie consommée par les circuits de multiplication et d'accumulation analogiques au cours de leur exécution, et
- l'ajout (606) de l'estimation de la quantité d'énergie à une fonction de perte du réseau neuronal, donnant ainsi une fonction de perte modifiée, et
- l'apprentissage de paramètres de poids du réseau neuronal (308) par l'intermédiaire d'un entraînement sur un ensemble de données, dans lequel le réseau neuronal s'exécute plusieurs fois, changeant ses paramètres de poids par l'intermédiaire d'une rétropropagation par rapport à la fonction de perte modifiée jusqu'à ce que la convergence soit atteinte ;

le procédé générant ainsi (608) un modèle d'inférence sur la base au moins de la session d'entraînement du réseau neuronal, la fonction de perte modifiée amenant les paramètres de poids du modèle d'inférence à avoir une représentation de bits clairsemée et amenant des valeurs de sortie générées par les circuits de multiplication et d'accumulation analogiques à avoir une précision réduite ;
dans lequel la détermination de l'estimation de la quantité d'énergie consommée par les circuits de multiplication et d'accumulation analogiques au cours de leur exécution comprend :
pour chaque nœud des nœuds :

la détermination d'un certain nombre de termes intermédiaires non nuls générés par le nœud,
la détermination d'une précision de calcul d'une valeur de sortie d'un convertisseur analogique-numérique d'un circuit respectif des circuits de multiplication et d'accumulation mettant en œuvre le nœud, et
la combinaison du certain nombre de termes intermédiaires non nuls générés par le nœud et de la valeur de précision de calcul du nœud pour générer une estimation de nœud d'une quantité d'énergie consommée par le circuit de multiplication et d'accumulation analogique respectif mettant en œuvre le nœud ; et
la combinaison des estimations de nœud pour générer l'estimation de la quantité d'énergie consommée par les circuits de multiplication et d'accumulation analogiques.

8. Procédé selon la revendication 7, dans lequel la couche particulière comprend au moins l'un des éléments suivants :

une couche entièrement connectée ; ou
une couche convolutionnelle.

9. Procédé selon la revendication 7, dans lequel les caractéristiques comprennent au moins l'un des éléments suivants :

une largeur de bits pour les données d'entrée fournies en entrée pour chacun des circuits de multiplication et d'accumulation analogiques ;
une largeur de bits pour un second paramètre de poids fourni en entrée pour chacun des circuits de multiplication et d'accumulation analogiques ;
une largeur de bits pour des données de sortie produites par les convertisseurs analogique-numérique des circuits de multiplication et d'accumulation analogiques ; ou
une taille de vecteur prise en charge par les circuits de multiplication et d'accumulation analogiques.

10. Procédé selon la revendication 7, dans lequel la valeur de précision de calcul est basée au moins sur un bit le plus significatif d'une valeur de sortie générée par le nœud.

11. Procédé selon la revendication 7, comprenant également :
l'application d'un algorithme d'optimisation de descente de gradient à la fonction de perte modifiée au cours de la session d'entraînement pour déterminer les paramètres de poids.

12. Procédé selon la revendication 7, comprenant également :
l'injection du bruit dans des valeurs de sortie générées par les nœuds, le bruit injecté imitant le bruit généré aux sorties de convertisseurs analogique-numérique des circuits de multiplication et d'accumulation analogiques, dans lequel la fonction de perte modifiée intègre le bruit injecté.

13. Code de programme (814, 932) stocké sur au moins une mémoire (820, 904) et configuré pour être exécuté par au moins un circuit de processeur (16, 810, 902), le code de programme étant configuré de manière à, lorsqu'il est exécuté par l'au moins un circuit de processeur, ce qu'il amène le circuit de processeur à effectuer le procédé selon l'une quelconque des revendications 7 à 12.

100 ↙

| Computing Device(s)  104 |
| --- |
| CPU(s)    106 |
| Hardware Accelerator 108 |
| NN Application(s)   110 |
| Model Trainer(s) 118 |
| NN Model(s)   120 |
| Content 122 |

User(s) 102

Network(s) 114

| Server(s) 116 |
| --- |
| Model Trainer(s) 118 |
| NN Model(s) 120 |
| Content 122 |

FIG. 1

EP 4 500 294 B1

FIG. 2

Neural Network Model Trainer 318

Neural Network 308

First Convolutional Layer 310

First Pooling Layer 312

Second Convolutional layer 314

Second Pooling Layer 316

Fully-Connected Layer 322

Inference Model 320

Node Instantiator 302

Noise Determiner 304

Configuration File 306

300

FIG. 3

| Receive a configuration file that specifies characteristics of an analog multiply-and-accumulation circuit utilized to implement a node of a particular layer of a neural network | 402 |

| During a training session of the neural network, inject noise into an output value generated by the node, the injected noise being based at least on the characteristics specified by the configuration file, the injected noise emulating noise generated at an output of an analog-to-digital converter of the analog multiply-an-accumulation circuit | 404 |

| Generate an inference model based at least on the training session of the neural network, the inference model associating a first weight parameter to the node that is based at least on the injected noise | 406 |

400

## FIG. 4

FIG. 5

Receive a configuration file that specifies characteristics of analog multiply-and-accumulation circuits utilized to implement nodes of a particular layer of a neural network — 602

↓

During a training session of the neural network, determine an estimate of an amount of power consumed by the analog multiply-and-accumulation circuits during execution thereof — 604

↓

Modify a loss function of the neural network based at least on the estimate — 606

↓

Generate an inference model based at least on the training session of the neural network, the modified loss function causing weight parameters of the inference model to have a sparse bit representation and causing output values generated by the analog multiply-and-accumulation circuits to have reduced precision — 608

600

## FIG. 6

For each node of the nodes, determine a number of non-zero midterms generated by the node — 702

↓

For each node of the nodes, determine a computational precision value of the node — 704

↓

For each node of the nodes, combine the number of non-zero midterms generated by the node and the computational precision value of the node to generate a node estimate of an amount of power consumed by an analog multiply-and accumulation circuit of the analog multiply-and accumulation circuits corresponding to the node — 706

↓

Combine the node estimates to generate the estimate of the amount of power consumed by the analog multiply-and-accumulation circuits — 708

700

## FIG. 7

800

802

Mobile Device

804

Memory 820

Non-Removable
Memory 822

Removable
Memory 824

Power Supply
882

GPS Receiver
884

Accelerometer
886

Input/Output
Ports 880

Processor Circuit
810

Physical
Connector 890

Input Device(s) 830

Touch Screen
with finger hover
detection 832

Microphone 834

Camera 836

Physical
Keyboard 838

Trackball 840

Output Device(s) 850

Speaker
852

Display
854

Operating
System 812

Wireless Modem(s)
860

Wi-Fi
862

Bluetooth
864

Cellular
866

Applications

Applications

Applications

814

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JINGYANG ZHANG et al.** Exploring Bit-slice Sparsity in Deep Neural Networks for Efficient ReRAM-Based Deployment. *arXiv:1909.08496v2*